# EUROPEAN PATENT SPECIFICATION

(11) **EP 3 448 913 B1**
(45) Date of publication and mention of the grant of the patent: **03.08.2022**
(21) Application number: 17721116.6
(22) Date of filing: 28.04.2017
(51) Int. Cl.: C08G 65/40, C08J 5/00, C08K 3/00, C08K 5/00, C09K 21/14, C08G 65/48, C08G 73/00, C08K 7/00, C08K 13/00, C08L 65/00, C08L 71/00, C08L 71/12, C08L 79/08, C08L 81/02, C08L 81/06, C09K 21/00, C08L 79/00

(54) **HIGH-FLOW POLYETHERIMIDE COMPOSITIONS**
KOMPATIBILISIERTE POLYMERZUSAMMENSETZUNGEN
COMPOSITIONS DE POLYMERE COMPATIBILISEES

(30) Priority: 29.04.2016 US 201662329482 P; 08.09.2016 EP 16187796; 09.02.2017 US 201762456964 P
(43) Date of publication of application: 06.03.2019
(73) Proprietor: Solvay Specialty Polymers USA, LLC, Alpharetta, Georgia 30005-3914 (US)
(72) Inventor: EL-HIBRI, Mohammad Jamal, Atlanta, Georgia 30350 (US)
(74) Representative: Benvenuti, Federica
(86) International application number: PCT/EP2017/060213
(87) International publication number: WO 2017/186921

(56) References cited:
- WO-A1-2015/059216
- WO-A1-2015/124903
- CN-A- 1 884 330
- US-A1- 2015 251 353

## Description

The present invention relates to high-flow polymer compositions including a polyetherimide (PEI), a PEEK-PEDEK copolymer, and optionally a poly(aryletherketone) (PAEK) other than the PEEK-PEDEK copolymer, methods of making the polymer compositions, and shaped articles including the polymer compositions.

### BACKGROUND

WO2015059216A1 discloses a friction and wear article comprising at least one part made of a composition comprising : i. from 35 to 98 % by weight (wt. %) of a polymeric material, comprising, relative to the total weight of the composition (C) : - from 25 to 85 wt. % of at least one polyetherimide polymer [(PEI) polymer], relative to the total weight of the (PEI) polymer and the (PAEK) polymer, - from 15 to 75 wt. % of at least one polyaryletherketone polymer [(PAEK) polymer], relative to the total weight of the (PEI) polymer and the (PAEK) polymer; and ii. from 2 to 65 wt. % of a filler comprising, relative to the total weight of the composition (C) : - from 5 to 95 wt. % of at least one fibrous filler, relative to the total weight of filler, and - from 5 to 95 wt. % of at least one mineral non- fibrous filler, relative to the total weight of filler. WO2015059216A1 does not discloses compositions comprising PEI and a PEEK-PEDEK copolymer.

WO2015124903A1 discloses a process for manufacturing an object by laser sintering comprises: (i)selecting a powder comprising a polymeric material having a repeat unit of formula -O-Ph-O-Ph-CO-Ph- I, and a repeat unit of formula -O-Ph-Ph-O-Ph-CO-Ph- II wherein Ph represents a phenylene moiety; and (ii) selectively sintering the powder to produce the object. WO2015124903A1 does not discloses the use of compositions comprising PEI and a PEEK-PEDEK copolymer.

US 2015/0251353A1 relates to a method for printing a three-dimensional part with an additive manufacturing system. US 2015/0251353A1 does not discloses the use of compositions comprising PEI and a PEEK-PEDEK copolymer.

CN1884330A discloses a method for preparing polyetheretherketone and polyetheretherketone terpolymer by using sulfolane. This document does not disclose compositions of PEI and PEEK-PEDEK copolymer.

Polyetherimide (PEI) is a high performance polymer known for its heat, solvent, and flame resistance. PEI possesses good mechanical toughness and chemical resistance properties for many engineering applications; however, these benefits are not always possible to take advantage of because of its relatively high melt viscosity. This is especially the case in applications requiring very thin parts or layers, such as mobile electronics or wire coating. Another example is fused filament fabrication additive manufacturing, in which low melt viscosities are needed to allow polymer deposition without the need to use extremely high melt temperatures as the viscosity required for polymer deposition can be achieved at lower temperatures with the use of lower melt viscosity materials. High temperatures may degrade the polymer over time and generate charred material, which can plug the deposition nozzle of the additive manufacturing device or be introduced into the part being manufactured.

Accordingly, a need exists for high-flow PEI compositions that do not compromise PEI's desirable properties.

### DETAILED DESCRIPTION OF PREFERRED EMBODIMENTS

Described herein are polymer compositions comprising a polyetherimide (PEI), a PEEK-PEDEK copolymer (as described below), and optionally a poly(aryl ether ketone) (PAEK) other than the PEEK-PEDEK copolymer, methods of making the polymer composition, and shaped articles including the polymer composition.

Applicants surprisingly discovered that blending PEEK-PEDEK copolymer with PEI produces a polymer composition exhibiting improved flowability, impact resistance, and in some cases, improved chemical resistance.

Traditionally, increasing PEI flowability is accomplished by reducing its molecular weight, which also results in a significant decrease in impact performance and chemical resistance. Applicants surprisingly found that the addition of a PEEK-PEDEK copolymer to PEI results in a polymer composition with increased its flowability relative to PEI alone, while also overcoming the aforementioned traditional limitations. Unlike the conventional method of reducing the molecular weight of the PEI, the present approach does not compromise, and in fact improves, the Dynatup impact resistance of the polymer compositions described herein. Moreover, Applicants surprisingly found that at least in some instances, the addition of even relatively small amounts of PEEK-PEDEK copolymer to the PEI resulted in a polymer compositions exhibiting greater chemical resistance than that of PEI or PEEK-PEDEK copolymer alone.

Flowability of the polymer composition can be determined by measuring the melt flow rate (MFR). In some embodiments, the polymer composition has an MFR ranging from about 40 to about 60 g/10 min, preferably from about 42 to about 59 g/10min as measured at 400°C with a 2.16 kg weight according to ASTM D1238. In some aspects, the melt flow rate of the polymer composition is at least 25 %, preferably, at least 50 % greater than the melt flow rate of the PEI alone (i.e. the PEI without the other components in the polymer composition), where the melt flow rate is measured at 365°C with a 5.0 kg weight according to ASTM D1238. In alternative embodiments, the melt flow rate of the polymer composition can be as high as 150 % greater than the melt flow rate of the PEI alone.

The toughness of the polymer composition can be determined by measuring the Izod and Dynatup impact resistance. The polymer composition may have a Dynatup impact resistance ranging from about 62 to about 72 ft-lb, as measured according to ASTM D3763. Moreover, the polymer composition may have a Dynatup deflection at maximum load ranging from about 0.75 to about 0.85 inches as measured according to ASTM D3763. In some embodiments, the polymer composition may have a notched Izod impact resistance determined per ASTM D256 ranging from 0.80 to 2.25 ft-lb/in, preferably from 0.85 to 2.0 ft-lb/in.

Chemical resistance of a plastic to polar organic chemicals can be measured by its resistance to sunscreen lotion, which generally represents one of the harshest consumer chemicals. In particular, sunscreen lotion generally contains a spectrum of ultraviolet absorbing chemicals that can be highly corrosive to plastic. A representative sunscreen can include at least 1.8 wt. % avobenzone (1 (4-methoxyphenyl)-3-(4-tert-butylphenyl)-1,3-propanedione), at least 7 wt. % homosalate (3,3,5-trimethylcyclohexyl salicylate) and at least 5 wt. % octocrylene (2-ethylhexyl 2-cyano-3,3-diphenylacrylate). An example of the aforementioned sunscreen is commercially available under the trade name Banana Boat^{®} Sport Performance^{®} (SPF 30) from Edgewell (St. Louis, MO).

The chemical resistance of a polymer composition to chemicals such as sunscreen can be measured using environmental stress cracking resistance (ESCR) testing. ESCR is assessed by measuring the lowest strain necessary to visually observe cracking or crazing in a molded sample of the polymer composition after the sample is exposed to aggressive chemicals and aged in a controlled environment ("critical strain"). In general, the higher the critical strain, the higher the chemical resistance of the polymer composition. In some embodiments, the polymer composition has an ESCR critical strain to sunscreen of ≥ 1.0 %, preferably ≥ 1.5 %. The measurement of critical strain is described further in the Examples below.

The polymer composition preferably has a glass transition temperature (Tg) ranging from about 160°C to about 210°C, preferably from about 165°C to about 200°C, most preferably from about 169°C to about 200°C, where the Tg is the midpoint Tg determined on the second heat scan by differential scanning calorimetry (DSC) according to ASTM D3418 using a 20.00°C/min heating rate.

In some embodiments, the polymer composition has a heat deflection temperature determined per ASTM D648 ranging from about 145°C to about 185°C, preferably from about 150°C to about 180°C.

The above properties make the flow-enhanced PEI formulations suitable for use in applications that require a combination of toughness and chemical resistance along with high flowability. Examples of such applications include injection molding of thin walled articles (e.g., articles having a portion with a thickness less than 2.0 mm, preferably less than 1.5 mm and an overall average flow length to thickness ratio of greater than 50, preferably greater than 100, and more preferably greater than 150) parts for aircraft interiors, dishware and food processing components, fibers for woven and non-woven fabrics, thermoformable laminated sheets, and shaped articles made by additive manufacturing such as by fused filament fabrication.

### Polyetherimide (PEI)

As used herein, a polyetherimide (PEI) denotes any polymer of which more than 50 mol % of recurring units (R_{PEI}) are selected from the group consisting of units of formulae : 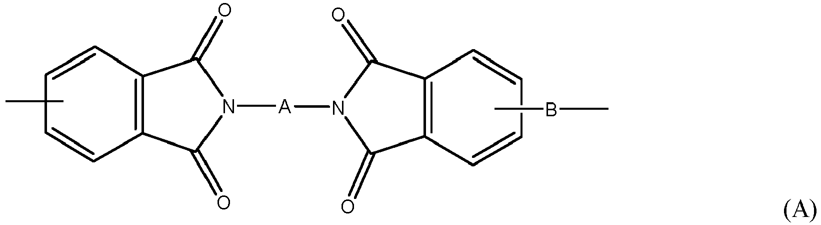 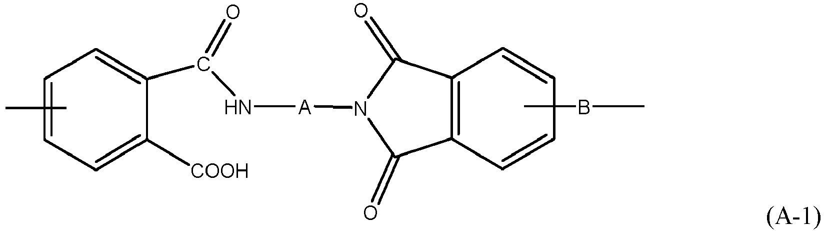 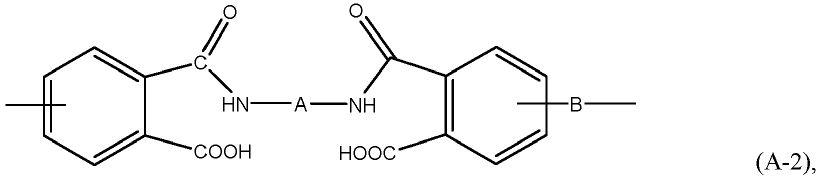 and combinations thereof,
where :
each B, equal to or different from each other, is independently selected from group consisting of-O- and -O-Ar-O-, where Ar is selected from the group consisting of moieties of formulae : 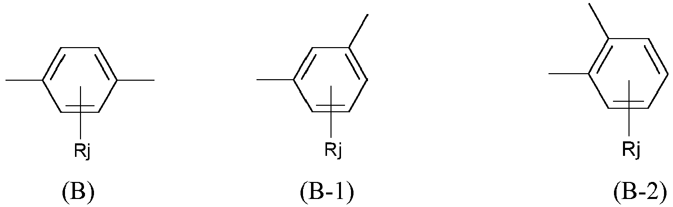 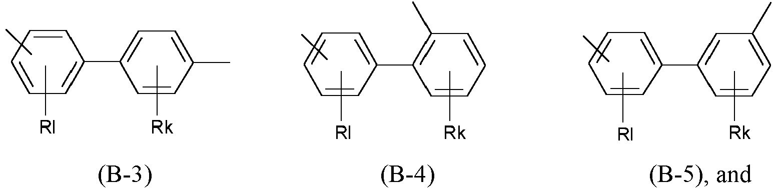 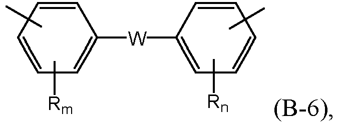 where each R, equal or different from each other, is independently selected from the group consisting of hydrogen, halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine, and quaternary ammonium; each j, k, 1, m and n, equal to or different from each other, is independently selected from 0, 1, 2, 3 and 4, preferably 0; and W is selected from the group consisting of alkylenes having 1 to 6 carbon atoms, in particular -C(CH₃)₂- and -CᵣH₂ᵣ- (r being an integer ranging from 1 to 6); perfluoroalkylenes having 1 to 6 carbon atoms, in particular -C(CF₃)₂- and -Cₛ F₂ₛ-(s being an integer ranging from 1 to 6); cycloalkylenes having 4 to 8 carbon atoms; alkylidenes having 1 to 6 carbon atoms;
cycloalkylidenes having 4 to 8 carbon atoms; -O- ; -S- ; -C(O)- ; -SO₂- ; and -SO-.

Preferably, B is a group of the formula (B-6), as shown above. More preferably, B is a group of formula : 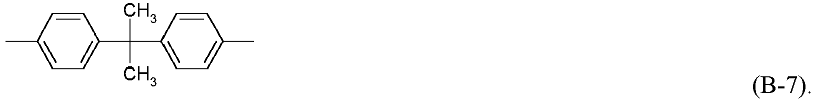 each A, equal to or different from each other, is selected from the group, -CtH₂ₜ-(t being an integer ranging from 1 to 6), and moieties of formulae : 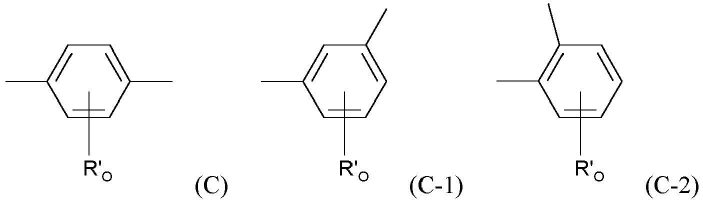 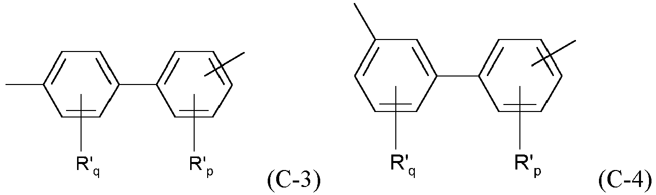 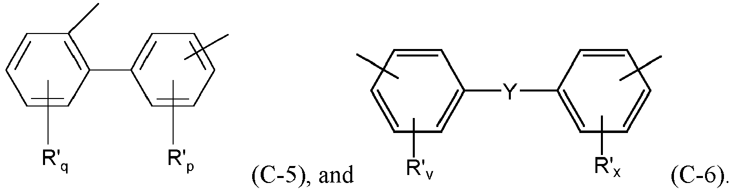 where each R', equal to or different from each other, is independently selected from the group consisting of hydrogen, halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine, and quaternary ammonium; o, p, q, v, and x, equal to or different from each other, is independently selected from 0, 1, 2, 3 and 4, preferably 0; and Y is selected from the group consisting of alkylenes having 1 to 6 carbon atoms, in particular -C(CH₃)₂- and -CᵤH₂ᵤ- (u being an integer from 1 to 6); perfluoroalkylenes having 1 to 6 carbon atoms, in particular - C(CF₃)₂- and -C_{w}F_{2w}-(w being an integer from 1 to 6); cycloalkylenes having 4 to 8 carbon atoms; alkylidenes having 1 to 6 carbon atoms; cycloalkylidenes having 4 to 8 carbon atoms; -O- ; -S- ; -C(O)- ; -SO₂- ; and -SO-.

Preferably, A is selected from the group consisting of moieties of formulae (C) to (C-2), as shown above. More preferably, A is selected from the group consisting of unsubstituted m-phenylene, unsubstituted p-phenylene, and a combination thereof.

In some embodiments, A is a group of formula :

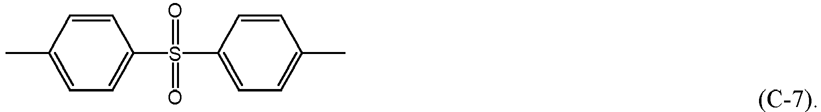

In some embodiments, the recurring units (R_{PEI}) are recurring units selected from the group consisting of those of formulae : 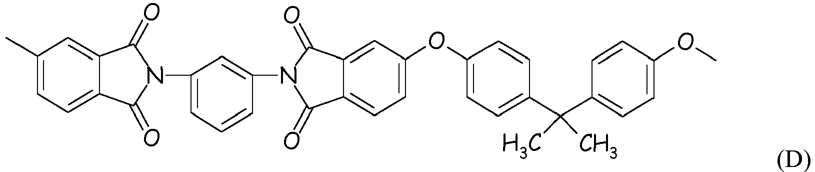 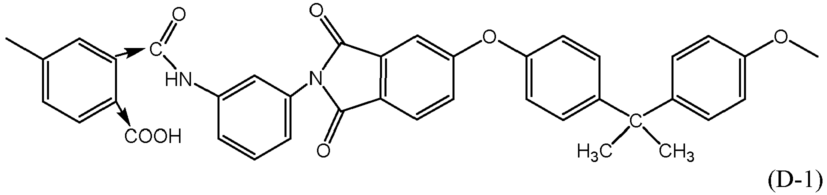 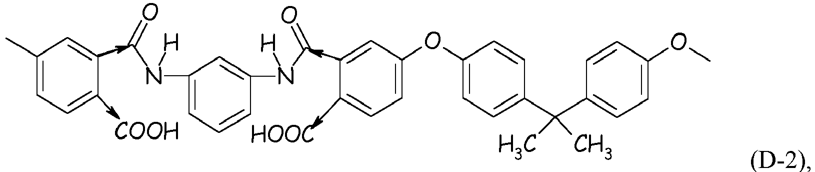 and combinations thereof,
where in formulae (D-1) and (D-2) the arrows "→" denote isomerism, such that in any recurring unit, the groups to which the arrows point from the same aromatic ring may exist as shown or be interchanged with respect to each other on that aromatic ring.

In some embodiments, the recurring units (R_{PEI}) are recurring units selected from the group consisting of those of formulae : 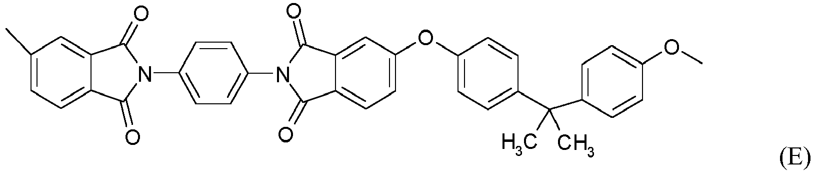 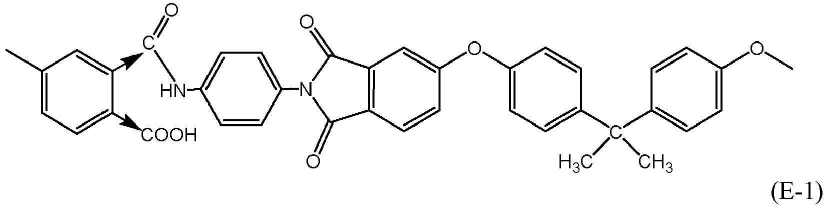 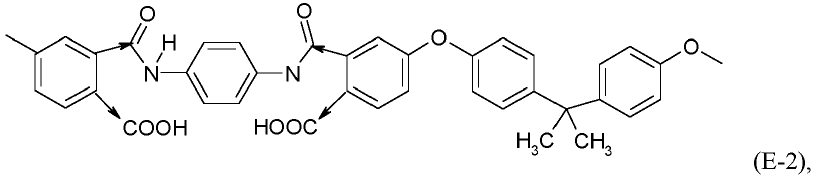 and combinations thereof,
where in formulae (E-1) and (E-2) the arrows "→" denote isomerism, such that in any recurring unit, the groups to which the arrows point from the same aromatic ring may exist as shown or be interchanged with respect to each other on that aromatic ring.

Preferably at least 75 mol %, 85 mol %, 95 mol %, and more preferably at least 99 mol % of the recurring units of the PEI are recurring units (R_{PEI}).

In some embodiments, at least 75 mol %, 85 mol %, 95 mol %, and more preferably at least 99 mol % of the recurring units (R_{PEI}) are units of formula (D), their corresponding amic acid forms of formulae (D-1) and (D-2), and combinations thereof.

In some embodiments, at least 75 mol %, 85 mol %, 95 mol %, and more preferably at least 99 mol % of the recurring units (R_{PEI}) are units of formula (E), their corresponding amic acid forms of formulae (E-1) and (E-2), and combinations thereof.

The PEI may have a weight average molecular weight (Mw) ranging from about 10,000 to about 150,000 g/mole, as measured by gel permeation chromatography using a polystyrene standard.

The polymer composition may include the PEI in an amount ranging from about 40 to about 99 wt. %, preferably from about 50 to about 75 wt. %, based on the combined weight of the PEEK-PEDEK copolymer and the polyetherimide (PEI).

In some embodiments, the PEI is a copolymer including :
1) at least 40 mol %, preferably at least 50 %, of first recurring units (R_{PEI-1}) selected from the group consisting of units of formulae (D), (D-1), (D-2), (E), (E-1), (E-2), as shown above, and combinations thereof; and
2) at most 60 mol %, preferably at most 50 %, of second recurring units (R_{PEI}-₂) selected from the group consisting of units of formulae (A), (A-1), and (A-2), shown above, where A is selected from the group consisting of moieties of formulae (C), (C-1), (C-2), and (C-7), shown above, and B is selected from the group consisting of-O-, and moieties of formula -O-Ar-O-, where Ar is selected from the group consisting of moieties of formulae (B) and (B-3), shown above.

In alternative embodiments, the PEI is a copolymer including :
1) at least 40 mol %, preferably at least 50 %, of first recurring units (R_{PEI-1}) selected from the group consisting of units of formulae (D), (D-1), (D-2), (E), (E-1), (E-2), as shown above, and combinations thereof; and
2) at most 60 mol %, preferably at most 50 %, of third recurring units (R_{PEI-3}) of formula : 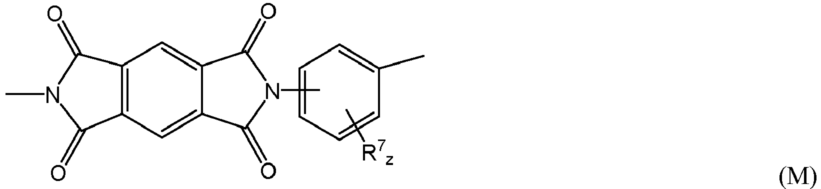 where each R⁷, equal or different from each other, is independently selected from the group consisting of hydrogen, halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine, and quaternary ammonium; and each z, equal to or different from each other, is independently selected from 0, 1, 2, 3 and 4, preferably zero.

In some embodiments, the polymer composition includes only one PEI polymer. In alternative embodiments, the polymer composition may include two, three, four, or more PEI.

For example, the polymer composition may include a blend of the following two polymers :
1) a first PEI including at least 50 mol %, at least 75 mol %, 85 mol %, 95 mol %, and more preferably at least 99 mol % of recurring units (R_{PEI}) selected from the group consisting of units of formulae (D), (D-1), (D-2), (E), (E-1), (E-2), as shown above, and combinations thereof; and
2) a second PEI including at least 50 mol %, at least 75 mol %, 85 mol %, 95 mol %, and more preferably at least 99 mol % of recurring units (R_{PEI}) selected from the group consisting of units of formulae (A), (A-1), and (A-2), shown above, where A is selected from the group consisting of moieties of formulae (C), (C-1), (C-2), and (C-7), shown above, and B is selected from the group consisting of-O-, and moieties of formula -O-Ar-O-, where Ar is selected from the group consisting of moieties of formulae (B) and (B-3), shown above.

In some embodiments, the weight ratio of the first PEI to the second PEI ranges from 40/60 to 95/5.

### PEEK-PEDEK Copolymer

As used herein, a "PEEK-PEDEK copolymer" denotes a copolymer comprising :
- recurring units (R_{PEEK}) of formula (F) : 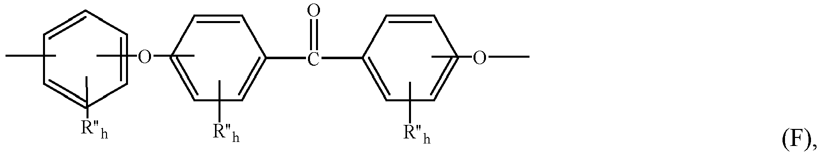 and
- recurring units (R_{PEDEK}) of formula (G) : 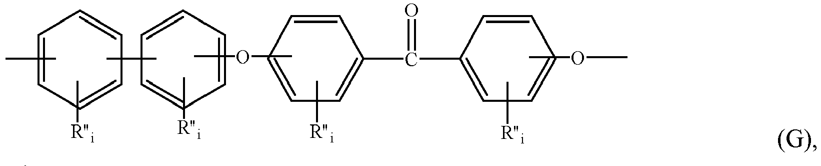 where :
   each R", equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate,
   alkali or alkaline earth metal phosphonate, alkyl phosphonate, amine and quaternary ammonium;
   each h, equal to or different from each other, is an integer ranging from 0 to 4; and
   each i, equal to or different from each other, is an integer ranging from 0 to 4.

In some embodiments, recurring units (R_{PEEK}) are selected from units of formula : 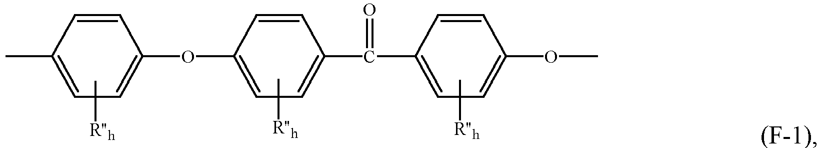 and recurring units (R_{PEDEK}) are selected from units of formula : 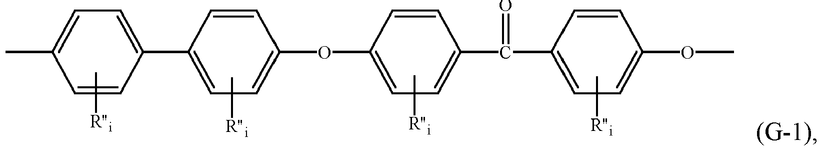 where R", h and i are as described above.

Preferably each h is zero, preferably each i is zero, and most preferably, each of h and i are zero such that the PEEK-PEDEK copolymer comprises :
- recurring units (R_{PEEK}) of formula : 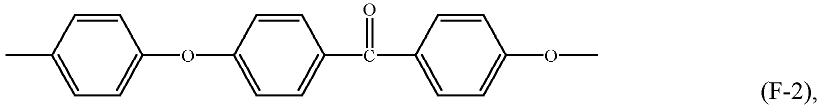 and
- recurring units (R_{PEDEK}) of formula :

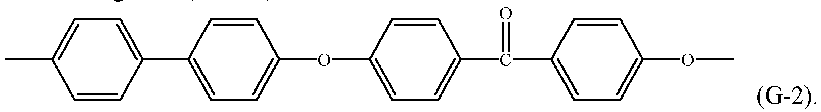

Recurring units (R_{PEEK}) and (R_{PEDEK}) collectively represent at least 50 mol %, preferably at least 60 mol %, 70 mol %, 80 mol %, 90 mol %, 95 mol %, and most preferably at least 99 mol % of recurring units in the PEEK-PEDEK copolymer.

Recurring units (R_{PEEK}) and (R_{PEDEK}) are present in the PEEK-PEDEK copolymer in a molar ratio (R_{PEEK})/(R_{PEDEK}) ranging from 90/10 to 65/40, preferably from 80/20 to 70/30. Most preferably, the molar ratio (R_{PEEK})/(R_{PEDEK}) is 80/20.

The weight-average molecular weight, Mw, of the PEEK-PEDEK copolymer preferably ranges from 50,000 to 110,000 Daltons, more preferably from 60,000 to 100,000 Daltons and most preferably from 70,000 to 90,000 Daltons as measured by gel permeation chromatography (GPC) using polystyrene calibration standards. Preferably, the PEEK-PEDEK copolymer exhibits a melt viscosity of at least 30 Pa-s, preferably at least 50 Pa-s, more preferably at least 80 Pa-s, as measured according to ASTM D3835 at 400°C and 1000 s-1 using a tungsten carbide die of 0.5 x 3.175 mm.

The polymer composition includes the PEEK-PEDEK copolymer in an amount ranging from about 1 to about 60 wt. %, preferably from about 25 to about 50 wt. %, more preferably from about 25 to about 40 wt %, based on the combined weight of the PEEK-PEDEK copolymer and the polyetherimide (PEI).

### Optional Poly(aryl ether ketone) (PAEK)

The polymer composition may optionally further comprise a poly(aryl ether ketone) (PAEK) different from the PEEK-PEDEK copolymer.

As used herein, a "poly(aryl ether ketone) (PAEK)" denotes any polymer comprising more than 50 mol % of recurring units (R_{PAEK}) selected from the group consisting of units of formulae : 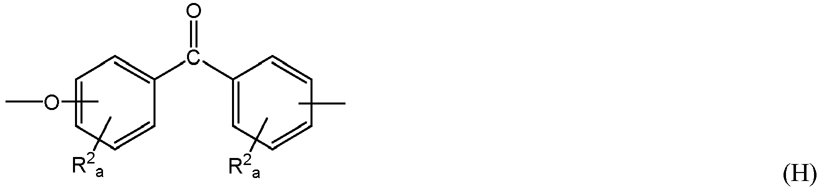 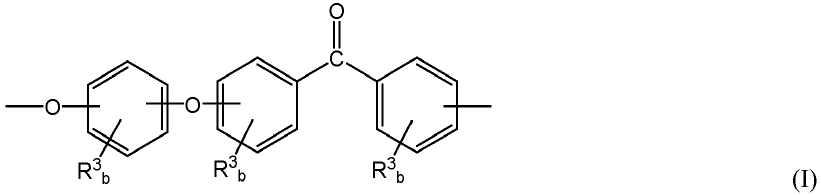 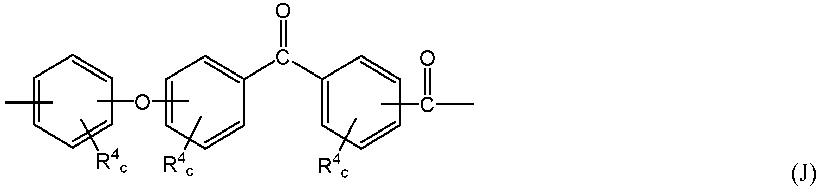 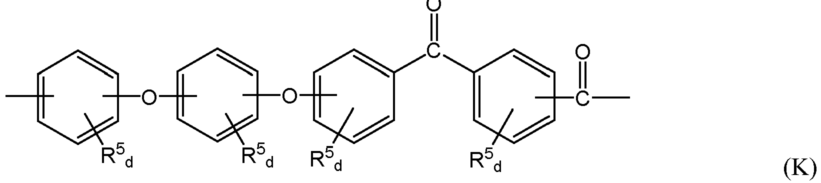 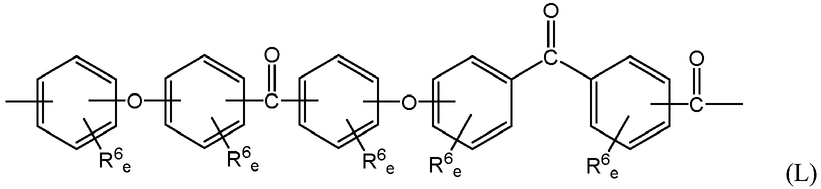 where each of R², R³, R⁴, R⁵, and R⁶, equal or different from each other, is independently selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium; and each of a, b, c, d, and e, equal to or different from each other, is independently selected from 0, 1, 2, 3, and 4. Preferably, each of a, b, c, d, and e is 0.

Preferably, the phenylene moieties in recurring units (R_{PAES}) have 1,3- or 1,4- linkages.

Preferably at least 60 mol %, 70 mol %, 80 mol %, 90 mol %, 95 mol %, 99 mol % of recurring units (R_{PAES}) are selected from the group consisting of recurring units of formulae (H), (I), (J), (K), and (L).

In some embodiments, the PAEK is poly(ether ketone) (PEK). As used herein, a "poly(ether ketone) (PEK)" denotes any polymer of which more than 50 mol % of the recurring units (R_{PAEK}) are recurring units of formula : 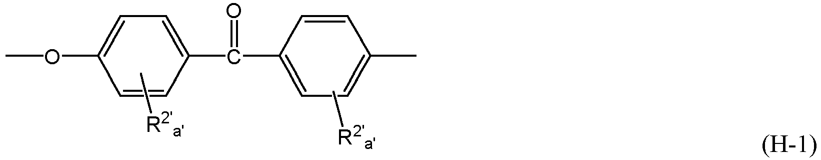 where R^{2'} and a', at each instance, is independently selected from the groups described above for R² and a, respectively. Preferably each a' in formulae (H-1) is zero.

Preferably at least 60 mol %, 70 mol %, 80 mol %, 90 mol %, 95 mol %, 99 mol % of recurring units (R_{PAEK}) are recurring units of formula (H-1).

In some embodiments, the PAEK is poly(ether ether ketone) (PEEK). As used herein, a "poly(ether ether ketone) (PEEK)" denotes any polymer of which more than 50 mol % of the recurring units (R_{PAEK}) are recurring units of formula : 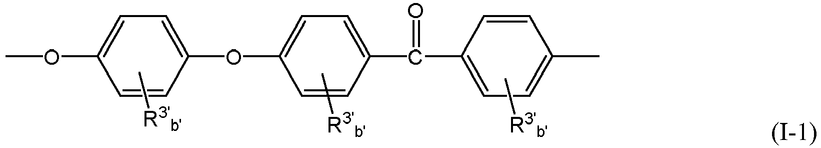 where R³ and b', at each instance, is independently selected from the groups described above for R³ and b, respectively. Preferably each b' in formulae (1-1) is zero.

Preferably at least 60 mol %, 70 mol %, 80 mol %, 90 mol %, 95 mol %, 99 mol % of recurring units (R_{PAEK}) are recurring units of formula (1-1).

In some embodiments, the PAEK is poly(ether ketone ketone) (PEKK). As used herein, a "poly(ether ketone ketone) (PEKK)" denotes any polymer of which more than 50 mol % of the recurring units (R_{PAEK}) are a combination of recurring units of formulas (J-1) and (J-2) : 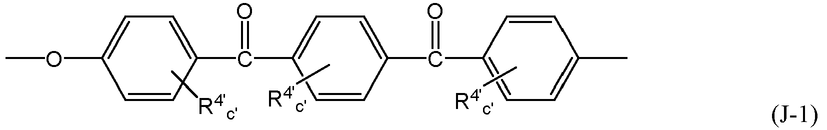 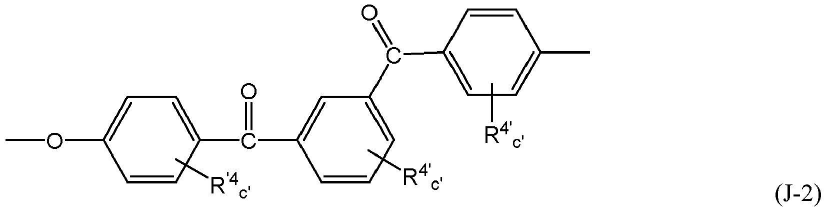 where R^{4'} and c', at each instance, are independently selected from the groups described above for R⁴ and c, respectively. Preferably each c' in formulae (J-1) and (J-2) is zero.

Preferably at least 60 mol %, 70 mol %, 80 mol %, 90 mol %, 95 mol %, 99 mol % of recurring units (R_{PAEK}) are a combination of recurring units (J-1) and (J-2).

In some embodiments, the mol ratio of units (J-1) : (J-2) ranges from 50:50 to 85:15, preferably from 55:45 to 80:20, more preferably from 65:35 to 75:25.

In some embodiments, the PAEK is poly(ether ether ketone ketone) (PEEKK). As used herein, a "poly(ether ether ketone ketone) (PEEKK)" denotes any polymer of which more than 50 mol % of the recurring units (R_{PAEK}) are recurring units of formula : 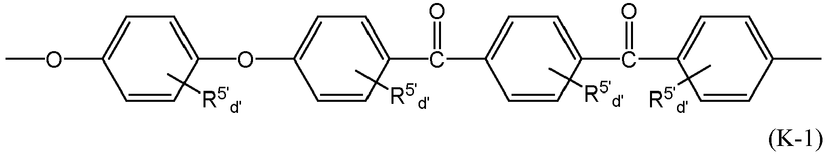 where R^{5'} and d', at each instance, are independently selected from the groups described above for R⁵ and d, respectively. Preferably each d' in formulae (K-1) is zero.

Preferably at least 60 mol %, 70 mol %, 80 mol %, 90 mol %, 95 mol %, 99 mol % of recurring units (R_{PAEK}) are recurring units of formula (K-1).

In some embodiments, the PAEK is poly(ether ketone ether ketone ketone) (PEKEKK). As used herein, a "poly(ether ketone ether ketone ketone) (PEKEKK)" denotes any polymer of which more than 50 mol % of the recurring units (R_{PAEK}) are recurring unit of formula : 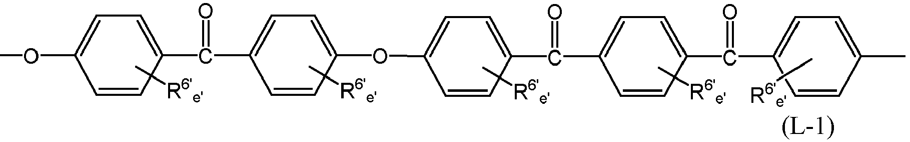 where R^{6'} and e', at each instance, are independently selected from the groups described above for R⁶ and e, respectively. Preferably, each e' in formulae (L-1) is zero.

Preferably, at least 60 mol %, 70 mol %, 80 mol %, 90 mol %, 95 mol %, 99 mol % of recurring units (R_{PAEK}) are recurring units of formula (L-1).

The PAEK is preferably PEK, PEEK, PEKK, PEKEKK, or PEDEKK, most preferably PEEK.

The amount of the optional PAEK in the polymer composition ranges from 0 to about 25 wt. %, preferably from 5 to 20 wt. % based on the total weight of the polymer composition.

### Optional Reinforcing Fillers

The polymer composition may optionally include reinforcing fillers such as fibrous or particulate fillers. A fibrous reinforcing filler is a material having length, width and thickness, wherein the average length is significantly larger than both the width and thickness. Preferably, such a material has an aspect ratio, defined as the average ratio between the length and the smallest of the width and thickness of at least 5. Preferably, the aspect ratio of the reinforcing fibers is at least 10, more preferably at least 20, still more preferably at least 50. The particulate fillers have an aspect ratio of at most 5, preferably at most 2.

Preferably, the reinforcing filler is selected from mineral fillers, such as talc, mica, kaolin, calcium carbonate, calcium silicate, magnesium carbonate; glass fibers; carbon fibers, boron carbide fibers; wollastonite; silicon carbide fibers; boron fibers, graphene, carbon nanotubes (CNT), and the like. Most preferably, the reinforcing filler is glass fiber, preferably chopped glass fiber.

The amount of the reinforcing filler may range in the case of particulate fillers, from 1 wt. % to 40 wt. %, preferably from 5 wt. % to 35 wt. % and most preferably from 10 wt. % to 30 wt. %, and in the case of fibrous fillers from 5 wt. % to 50 wt. %, preferably from 10 wt. % to 40 wt. %, and most preferably from 15 wt. % to 30 wt. % based on the total weight of the polymer composition. In some embodiments, the polymer composition is free of a fibrous filler. Alternatively the polymer composition may be free of a particulate filler. Preferably, the polymer composition is free of reinforcing fillers.

### Optional Additives

In addition to the PEI, the PEEK-PEDEK copolymer, the optional PAEK, and the optional reinforcing filler, the polymer composition may further include optional additives such as titanium dioxide, zinc sulfide, zinc oxide, ultraviolet light stabilizers, heat stabilizers, antioxidants such as organic phosphites and phosphonites, acid scavengers, processing aids, nucleating agents, lubricants, flame retardants, a smoke-suppressing agents, anti-static agents, anti-blocking agents, and conductivity additives such as carbon black.

When one or more optional additives are present, their total concentration is preferably less than 10 wt. %, more preferably less than 5 wt. %, and most preferably less than 2 wt. %, based on the total weight of polymer composition.

### Method of Making the Polymer Composition

Exemplary embodiments include a method of making the polymer composition described herein by melt mixing the PEI, the PEEK-PEDEK copolymer, the optional PAEK, the optional reinforcing filler, and the optional additives.

The polymer composition can be prepared by any known melt-mixing process that is suitable for preparing thermoplastic molding compositions. Such a process may be carried out by heating the polymers above their melting temperatures to form a melt mixture of the polymers. In the some aspects, the components for forming the polymer composition are fed, simultaneously or separately, to the melt-mixing apparatus and melt-mixed in the apparatus. Suitable melt-mixing apparatuses are, for example, kneaders, Banbury mixers, single-screw extruders, and twin-screw extruders.

### Shaped Articles Including the Polymer Composition

Exemplary embodiments also include shaped articles comprising the above-described polymer composition.

The shaped articles may be made from the polymer composition using any suitable melt-processing method such as injection molding, extrusion molding, roto-molding, or blow-molding.

As discussed above, the polymer composition may be well suited for the manufacture of articles useful in a wide variety of applications. For example, the high-flow, toughness, and chemical resistance properties of the polymer composition makes it especially suitable for use in thin walled articles, parts for aircraft interiors, dishware and food processing components, fibers for woven and non-woven fabrics, thermoformable laminated sheets, and shaped articles made by additive manufacturing such as by fused filament fabrication.

Exemplary embodiments will now be described in the following nonlimiting examples.

### EXAMPLES

The effects of adding a PEEK-PEDEK copolymer to a PEI polymer composition were evaluated. Table 1 below shows the compositions and test results for three working examples (Examples 1, 2, and 3). For comparison, standard flow PEI (Comparative Example 1), PEEK-PEDEK copolymer (Comparative Example 2), and high flow PEI (Comparative Example 3) were also evaluated.

### Materials

Ultem^{®} PEI grade 1000 natural resin available from SABIC Innovative Plastics. This is a standard viscosity grade of PEI for general purpose extrusion and injection molding applications. It has a nominal melt flow rate of 9 g/10 min as measured using a melt index apparatus according to ASTM D1238 at 337°C and using a 6.6 kg weight.

Ultem^{®} PEI grade 1010 natural resin also available from Sabic Innovative Plastics. This is a low viscosity grade of PEI intended for injection molding applications that require high flowability. It has a nominal melt flow rate of 17.8 g/10 min as measured using a melt index apparatus according to ASTM D1238 at 337°C and using a 6.6 kg weight.

The copolymer used in the examples was a poly(ether ether ketone) (PEEK) copolymer where the stoichiometric amount of hydroquinone was partially substituted with biphenol (4,4'-dihydroxydiphenyl). Such copolymers are also known as "PEEK-PEDEK copolymers" where "PEDEK" represents the polymer repeating unit from the polycondensation of biphenol with 4,4' -difluorobenzophenone.

The PEEK-PEDEK copolymer used in the examples was 80/20 PEEK-PEDEK copolymer (80 mol % PEEK, 20 mol % PEDEK).

### Preparation of Formulations

The compositions of the Examples and Comparative Examples are shown below in Table 1. All polymer blends were prepared by first tumble blending pellets of the resins to be blended in their respective amounts for about 20 minutes, followed by melt compounding. The compositions of Examples were miscible (i.e. exhibited a single glass transition temperature Tg) and transparent.

### Testing of the Formulations

Mechanical properties were tested for all the formulations using injection molded 0.125 in (3.2 mm) thick ASTM test specimens which consisted of 1) Type I tensile bars, 2) 5 in x 0.5 in x 0.125 in flexural bars, and 3) 4 in x 4 in x 0.125 in plaques for the instrumented impact (Dynatup) testing. The following ASTM test methods were employed in evaluating all compositions :
- D638 :: Tensile properties
- D790 :: Flexural properties
- D256 :: Izod impact resistance (notched)
- D4812 :: Izod impact resistance (unnotched)
- D3763 :: Instrumented impact resistance also known by the name Dynatup impact
- D648 :: Heat deflection temperature
- D3418 :: Glass transition by differential scanning calorimetry (20°C/min heating rate)

Melt rheology and melt processability were evaluated by melt flow rate measurement according to ASTM D1238 at 400°C with a 2.16 kg weight.

Chemical resistance against sunscreen cream was tested by applying Banana Boat^{®} SPF30 broad spectrum sunscreen cream to ASTM D-246C (5 in. x 0.5 in. x 0.125 in.) flexural bars that were mounted onto a Bergen parabolic variable strain flexural jig, which varied the applied strain on the plastic material from about zero to about 2.0 %, to form stressed assemblies. As used herein, x % applied strain is the strain required to elongate the molded sample of the polymer composition by x %. For example, if the length of the molded sample was 1 in., 2 % applied strain refers to the strain required to elongate the molded sample to 1.02 in. in the direction of the applied strain. The stressed assemblies were aged in a controlled humidity environmental chamber at a temperature of about 65°C and relative humidity of about 90 % for 24 hours. Subsequently, the assemblies were removed from the chamber and the ASTM flexural bars mounted on the strain jigs were inspected for any signs of cracking or crazing. Critical strain to failure was recorded as the lowest strain level on the parabolic fixture on which cracking or crazing was observed.

The effects of PEEK-PEDEK copolymer addition on the mechanical, chemical resistance, and flow properties of PEI are shown below in Table 1.

**Table 1**

| Mechanical, Thermal, Flow, and Chemical Resistance Properties of Exemplary Formulations | | | | | | |
|---|---|---|---|---|---|---|
| **Example →** | **C1** | **E1** | **E2** | **E3** | **C2** | **C3** |
| Ultem^{®} 1000 PEI | 100 | 75 | 60 | 50 | --- | --- |
| 80-20 PEEK-PEDEK Copolymer | --- | 25 | 40 | 50 | 100 | --- |
| Ultem^{®} 1010 PEI | --- | --- | --- | --- | --- | 100 |

| **Tests** | | | | | | |
|---|---|---|---|---|---|---|
| Tensile Yield Strength (psi) | 16500 | 15000 | 13400 | 11700 | 10200 | 16600 |
| Tensile Modulus (Ksi) | 488 | 460 | 431 | 411 | 398 | 498 |
| Tensile Yield Elongation (%) | 7.0 | 6.9 | 6.6 | 6.1 | 5.4 | 7.0 |
| Tensile Elongation at Break (%) | 32 | 48 | 67 | 92 | 250 | 26 |
| Flexural Strength (psi) | 20800 | 19400 | 18200 | 16700 | 15400 | 21400 |
| Flexural Modulus (Ksi) | 488 | 458 | 434 | 411 | 403 | 504 |
| Notched Izod (ft-lb/in) | 0.78 | 0.89 | 1.32 | 1.99 | 31.4 | 0.63 |
| Unnotched Izod (ft-lb) | 31.6 | 53.9 | No Break | No Break | No Break | 29.7 |
| Dynatup Impact - Total Energy (ft-lb) | 18.9 | 67.5 | 63.2 | 71.2 | 60.8 | 10.7 |
| Dynatup Impact - Deflection at Maximum Load (in) | 0.38 | 0.80 | 0.76 | 0.84 | 0.81 | 0.28 |
| Heat Deflection Temperature (°C) | 196 | 180 | 166 | 150 | 143 | 195 |
| Tg, by DSC (°C) | 219.7 | 199.7 | 181.9 | 169.1 | 153.6 | 217.1 |
| ESCR- Critical Strain in Sunscreen (%) | 1.0 | N.E.^{∗} | 1.5 | 1.0 | 1.2 | --- |
| Melt Flow Rate at 400°C, 2.16 kg (g/10 min) | 23.8 | 42.3 | 56.8 | 58.6 | 73.3 | 49.7 |

| | | | | | | |
|---|---|---|---|---|---|---|
| ^{∗}NE = No effect up to maximum applied strain of 2.0 % | | | | | | |

As shown above, there was a significant improvement in melt flow with the addition of even a minor amount of PEEK-PEDEK copolymer. The melt flow of the PEI compositions modified with PEEK-PEDEK exhibited substantially enhanced flow relative to unmodified standard flow PEI (Comparative Example 1), and the magnitude of improvement was on the same order as the melt flow rate achieved by the lower molecular weight PEI grade, Ultem^{®} 1010 natural resin (Comparative Example 3).

Moreover, the flow enhancement was not achieved at the expense of a reduction in toughness as is usually the case in the well-known trade-off between polymer mechanical toughness and melt flow characteristics. The Dynatup impact resistance of the polymer compositions (Examples 1 to 3) was surprisingly found to be significantly greater than both the standard flow PEI alone (Comparative Example 1) and the PEEK-PEDEK copolymer alone (Comparative Example 2). In addition, the Dynatup deflection at maximum load of the polymer compositions (Examples 1 to 3) was unexpectedly found to be equivalent to the Dynatup deflection at maximum load of the PEEK-PEDEK copolymer alone (Comparative Example 2)-even at a loading of only 25 % of the PEEK-PEDEK copolymer (Example 1). These findings are in contrast to the dramatic reduction in both Dynatup impact parameters for the lower molecular weight PEI (Comparative Example 3).

Finally, the environmental stress cracking resistance (ESCR) critical strain to sunscreen of Examples 1 and 2 was surprisingly found to be significantly greater than that of both the standard flow PEI alone (Comparative Example 1) and the PEEK-PEDEK copolymer alone (Comparative Example 2).

## Claims

1. A polymer composition comprising :
(i) a polyetherimide (PEI) including at least 50 mol % of recurring units (R_{PEI}) selected from the group consisting of units of formulae : 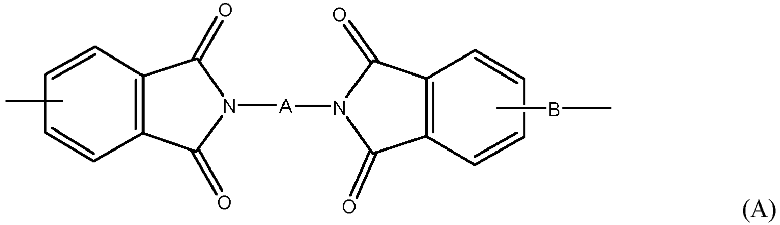 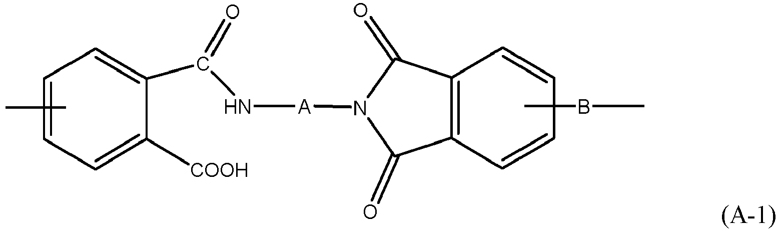 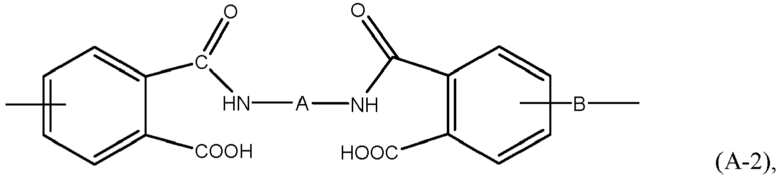 and combinations thereof,
wherein :
each B, equal to or different from each other, is independently selected from group consisting of-O- and -O-Ar-O-, wherein :
Ar is selected from the group consisting of moieties of formulae : 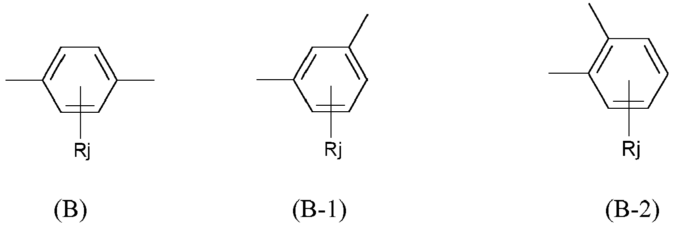 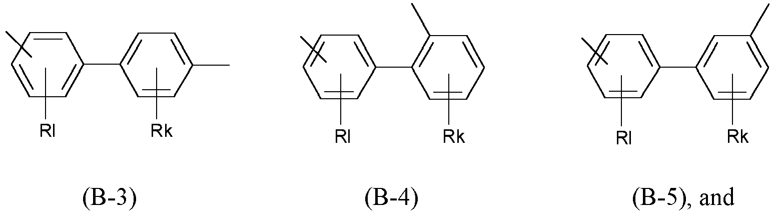 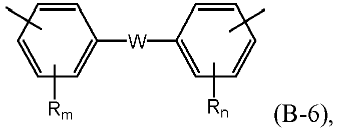 wherein :
each R, equal or different from each other, is independently selected from the group consisting of hydrogen, halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine, and quaternary ammonium;
each j, k, 1, m and n, equal to or different from each other, is independently selected from 0, 1, 2, 3 and 4, preferably 0; and
W is selected from the group consisting of :
alkylenes having 1 to 6 carbon atoms, in particular -C(CH₃)₂- and -CᵣH2r-, wherein r is an integer ranging from 1 to 6;
perfluoroalkylenes having 1 to 6 carbon atoms, in particular -C(CF₃)₂- and -CₛF₂ₛ-, wherein s is an integer ranging from 1 to 6;
cycloalkylenes having 4 to 8 carbon atoms;
alkylidenes having 1 to 6 carbon atoms;
cycloalkylidenes having 4 to 8 carbon atoms;
-O- ; -S- ; -C(O)- ; -SO₂- ; and -SO-.
each A, equal to our different from each other, is selected from the group consisting of -CtH₂ₜ-, wherein t is an integer ranging from 1 to 6, and moieties of formulae : 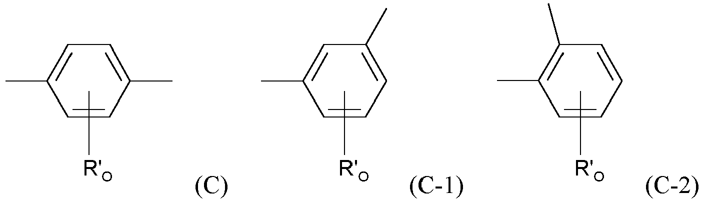 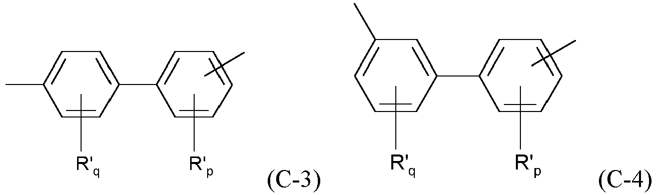 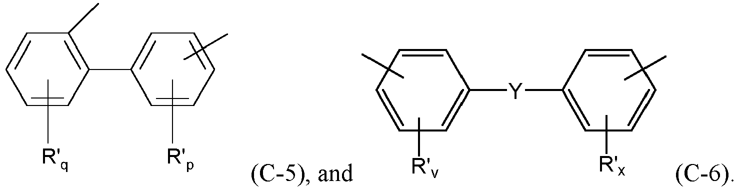 wherein :
each R', equal to or different from each other, is independently selected from the group consisting of hydrogen, halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine, and quaternary ammonium;
o, p, q, v, and x, equal to or different from each other, is independently selected from 0, 1, 2, 3 and 4, preferably 0; and
Y is selected from the group consisting of :
alkylenes having 1 to 6 carbon atoms, in particular, -C(CH₃)₂- and -CᵤH₂ᵤ-, wherein u is an integer ranging from 1 to 6;
perfluoroalkylenes having 1 to 6 carbon atoms, in particular -C(CF₃)₂- and -Cw F_{2w}-, wherein w is an integer ranging from 1 to 6;
cycloalkylenes having 4 to 8 carbon atoms; alkylidenes having 1 to 6 carbon atoms;
cycloalkylidenes having 4 to 8 carbon atoms;
-O- ; -S- ; -C(O)- ; -SO₂- ; and -SO-;
(ii) a PEEK-PEDEK copolymer comprising :
- recurring units (R_{PEEK}) of formula : 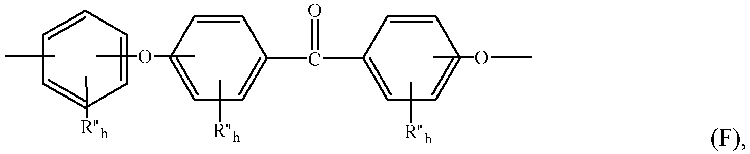 and
- recurring units (R_{PEDEK}) of formula : 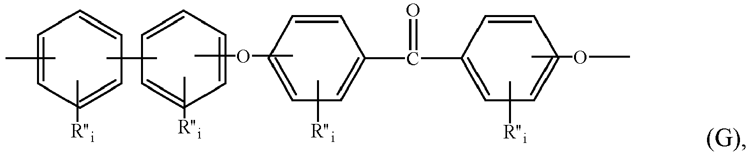 wherein :
each R", equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium,
each h, equal to or different from each other, is an integer ranging from 0 to 4,
each i, equal to or different from each other, is an integer ranging from 0 to 4; and
the total concentration of recurring units (RPEEK) and (RPEDEK) is at least 50 mol %, relative to the total number of moles of recurring units in the PEEK-PEDEK copolymer; and
(iii) optionally a poly(aryl ether ketone)(PAEK) comprising more than 50 mol % of recurring units (R_{PAEK}) selected from the group consisting of units of formulae : 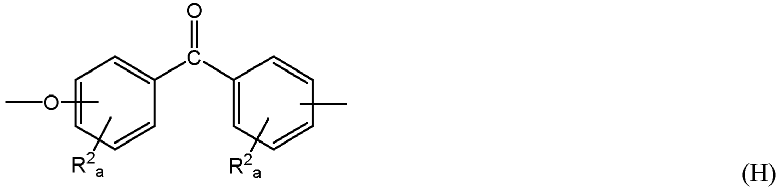 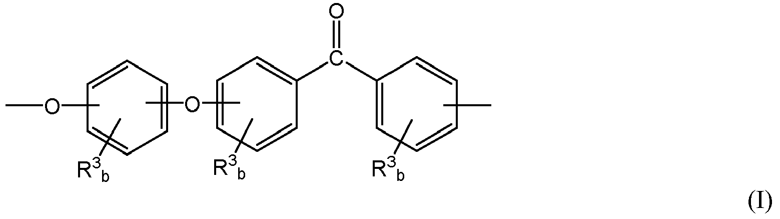 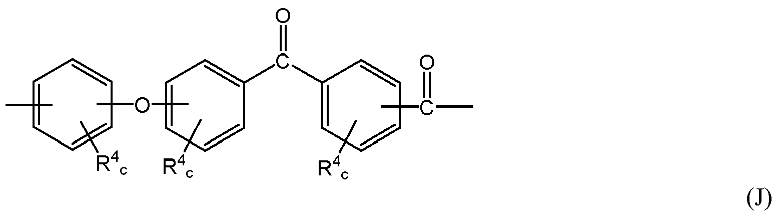 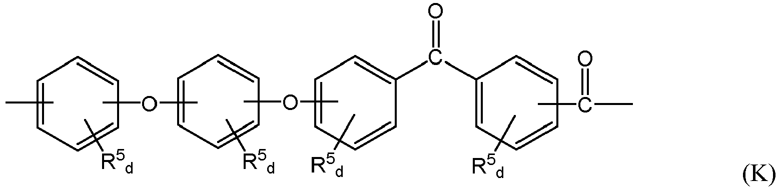 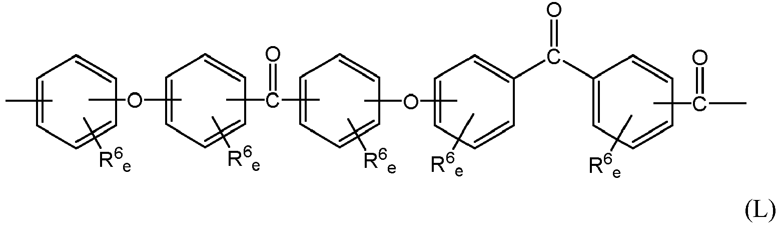 wherein :
each of R², R³, R⁴, R⁵, and R⁶, equal or different from each other, is independently selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium; and
each of a, b, c, d, and e, equal to or different from each other, is independently selected from 0, 1, 2, 3, and 4.

2. The polymer composition of claim 1, wherein the polyetherimide (PEI) includes at least 50 mol % of recurring units (R_{PEI}) selected from the group consisting of units of formulae : 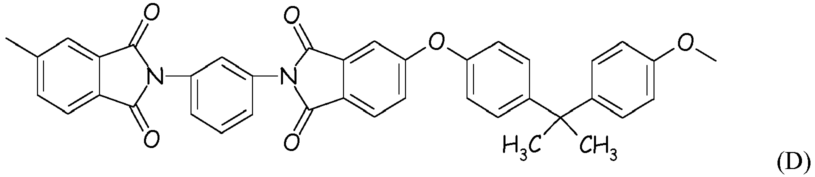 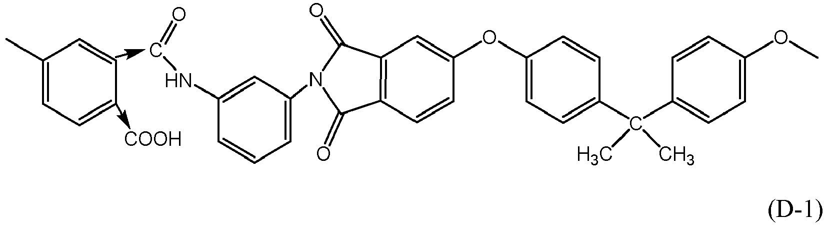 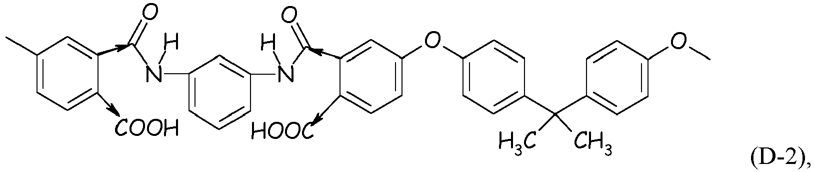 and combinations thereof,
wherein in formulae (D-1) and (D-2), the arrows "→" denote isomerism, such that in any recurring unit, the groups to which the arrows point from the same aromatic ring exist as shown or interchanged with respect to each other on said aromatic ring.

3. The polymer composition of claim 1, wherein the polyetherimide (PEI) includes at least 50 mol % of recurring units (R_{PEI}) selected from the group consisting of units of formulae : 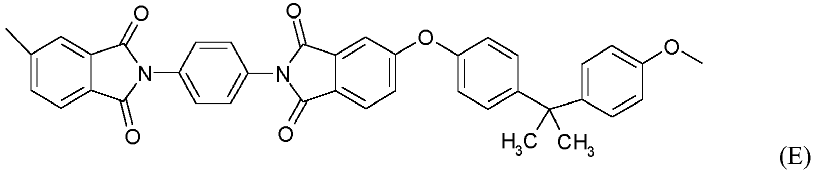 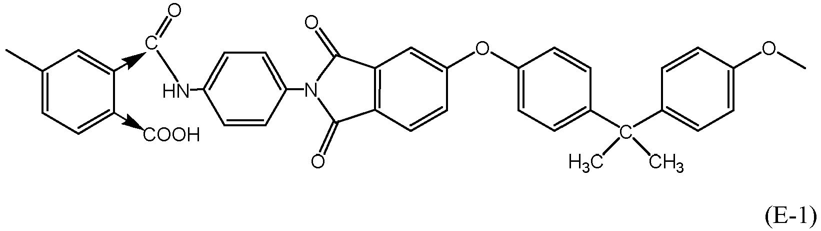 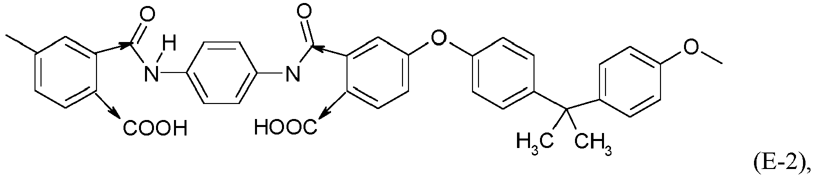 and combinations thereof,
wherein in formulae (E-1) and (E-2), the arrows "→" denote isomerism, such that in any recurring unit, the groups to which the arrows point from the same aromatic ring exist as shown or interchanged with respect to each other on said aromatic ring.

4. The polymer composition of any one of claims 1 to 3, wherein the PEEK-PEDEK copolymer comprises :
- recurring units (R_{PEEK}) of formula (F-2) : 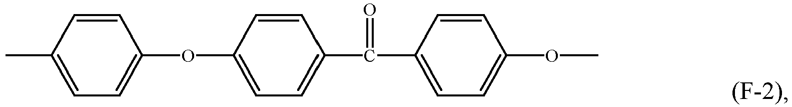 and
- recurring units (R_{PEDEK}) of formula (G-2) :

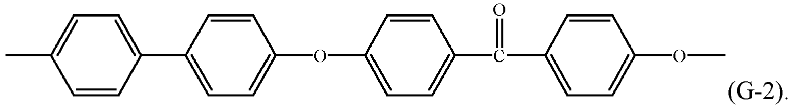

5. The polymer composition of any one of claims 1 to 4, wherein the polymer composition includes the PEEK-PEDEK copolymer in an amount ranging from about 1 to about 60 wt. %, preferably from about 25 to about 50 wt. %, based on the combined weight of the PEEK-PEDEK copolymer and the polyetherimide (PEI).

6. The polymer composition of any one of claims 1 to 5, wherein the polymer composition includes the polyetherimide (PEI) in an amount ranging from about 99 to about 40 wt. %, preferably from about 75 to about 50 wt. %, based on the combined weight of the PEEK-PEDEK copolymer and the polyetherimide (PEI).

7. The polymer composition of any one of claims 1 to 6, wherein the molar ratio of recurring units (R_{PEEK})/(R_{PEDEK}) ranges from 90/10 to 65/35, preferably from 80/20 to 70/30.

8. The polymer composition of any one of claims 1 to 7, wherein the melt flow rate of the polymer composition is at least 25 %, preferably at least 50 % greater than the melt flow rate of the PEI alone, wherein the melt flow rate is measured at 400°C with a 2.16 kg weight according to ASTM D1238.

9. The polymer composition of any one of claims 1 to 8, wherein the polymer composition has a Dynatup impact resistance ranging from about 62 to about 72 ft-lb, as measured according to ASTM D3763.

10. The polymer composition of any one of claims 1 to 9, wherein the polymer composition has an environmental stress cracking resistance critical strain to sunscreen of ≥ 1.0 %, preferably ≥ 1.5 %,
wherein the environmental stress cracking resistance is measured as the critical strain of an ASTM D-246C 5 in. x 0.5 in. x 0.125 in. flexural bar molded from the polymer composition after coating the flexural bar with sunscreen cream and applying a relative strain of 2 % to the coated flexural bar for 24 hours at 65° C and a relative humidity of 90 %, and
wherein the sunscreen comprises at least 1.8 wt. % avobenzone, at least 7 wt. % homosalate and at least 5 wt. % octocrylene.

11. The polymer composition of any one of claims 1 to 10, further comprising a reinforcing filler.

12. The polymer composition of claim 11, wherein the reinforcing filler is a fibrous filler, preferably glass fiber, and the polymer composition includes the fibrous filler in an amount ranging from 5 wt. % to 50 wt. %, preferably from 15 wt. % to 30 wt. %, based on the total weight of the polymer composition.

13. A method of making the polymer composition of any one of claims 1 to 12, comprising melt mixing the polyetherimide (PEI) and the PEEK-PEDEK copolymer.

14. A shaped article comprising the polymer composition of any one of claims 1 to 12.

15. The shaped article of claim 14, wherein the shaped article is an aircraft interior part, a dishware or food processing component, a fiber of a woven or non-woven fabric, a thermoformable laminated sheet, or an additive manufactured article.

## Patentansprüche

1. Polymerzusammensetzung, umfassend:
(i) ein Polyetherimid (PEI) mit mindestens 50 Mol-% Wiederholungseinheiten (R_{PEI}) aus der Gruppe bestehend aus Einheiten der Formeln: 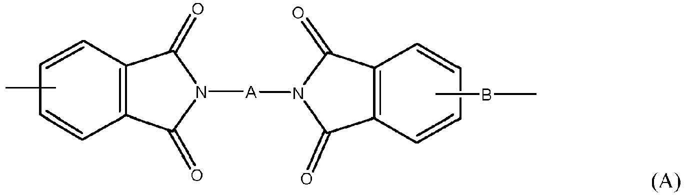 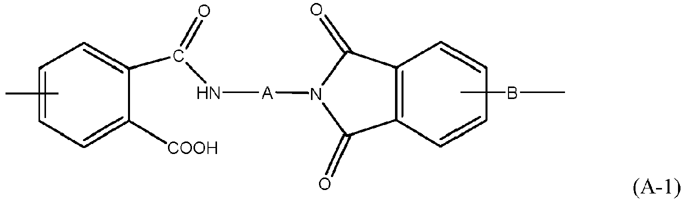 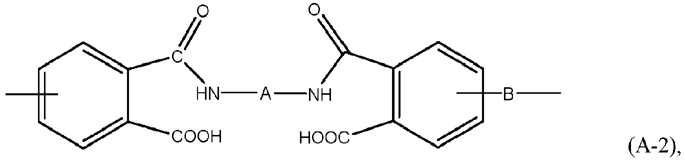 und Kombinationen davon,
wobei:
B jeweils gleich oder voneinander verschieden ist und unabhängig aus der Gruppe bestehend aus -O- und -O-Ar-O- ausgewählt ist, wobei:
Ar aus der Gruppe bestehend aus Gruppierungen der Formeln: 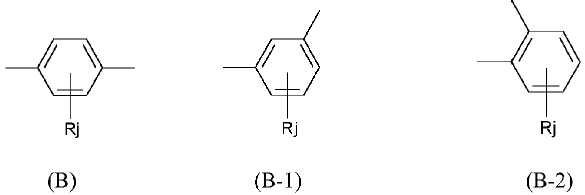 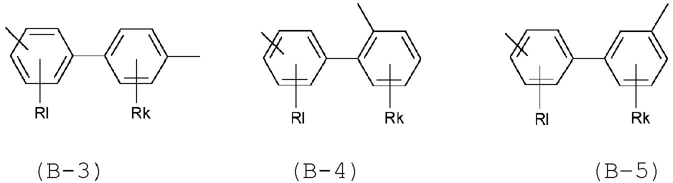 und 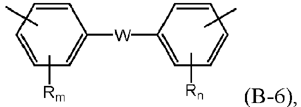 wobei:
R jeweils gleich oder voneinander verschieden ist und unabhängig aus der Gruppe bestehend aus Wasserstoff, Halogen, Alkyl, Alkenyl, Alkinyl, Aryl, Ether, Thioether, Carbonsäure, Ester, Amid, Imid, Alkali- oder Erdalkalimetallsulfonat, Alkylsulfonat, Alkali- oder Erdalkalimetallphosphonat, Alkylphosphonat, Amin und quartärem Ammonium ausgewählt ist;
j, k, l, m und n jeweils gleich oder verschieden sind und unabhängig aus 0, 1, 2, 3 und 4, vorzugsweise 0, ausgewählt sind; und W aus der Gruppe bestehend aus
Alkylengruppen mit 1 bis 6 Kohlenstoffatomen, insbesondere -C(CH₃)₂- und -CᵣH₂ᵣ-, wobei r für eine ganze Zahl im Bereich von 1 bis 6 steht; Perfluoralkylengruppen mit 1 bis 6 Kohlenstoffatomen, insbesondere -C(CF₃)₂- und -CₛF₂ₛ-, wobei s für eine ganze Zahl im Bereich von 1 bis 6 steht;
Cycloalkylengruppen mit 4 bis 8 Kohlenstoffatomen;
Alkylidengruppen mit 1 bis 6 Kohlenstoffatomen; Cycloalkylidengruppen mit 4 bis 8 Kohlenstoffatomen;
-O-; -S-; -C(O)-; -SO₂- und -SOausgewählt ist;
A jeweils gleich oder voneinander verschieden ist und aus der Gruppe bestehend aus -CₜH₂ₜ-ausgewählt ist, wobei t für eine ganze Zahl von 1 bis 6 steht, und
Gruppierungen der Formeln 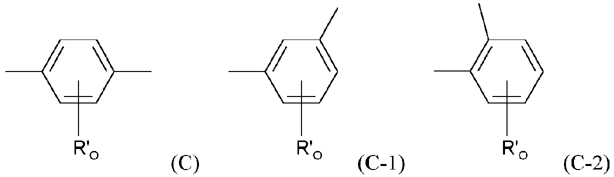 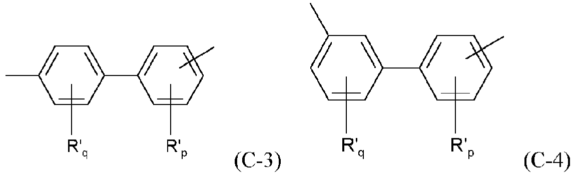 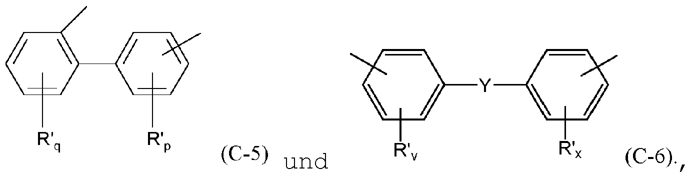 wobei:
R' jeweils gleich oder voneinander verschieden ist und unabhängig aus der Gruppe bestehend aus Wasserstoff, Halogen, Alkyl, Alkenyl, Alkinyl, Aryl, Ether, Thioether, Carbonsäure, Ester, Amid, Imid, Alkali- oder Erdalkalimetallsulfonat, Alkylsulfonat, Alkali- oder Erdalkalimetallphosphonat, Alkylphosphonat, Amin und quartärem Ammonium ausgewählt ist;
o, p, q, v und x gleich oder verschieden sind und unabhängig aus 0, 1, 2, 3 und 4, vorzugsweise 0, ausgewählt sind; und Y aus der Gruppe bestehend aus
Alkylengruppen mit 1 bis 6 Kohlenstoffatomen, insbesondere -C(CH₃)₂- und -CᵤH₂ᵤ-, wobei u für eine ganze Zahl im Bereich von 1 bis 6 steht;
Perfluoralkylengruppen mit 1 bis 6 Kohlenstoffatomen, insbesondere -C(CF₃)₂- und -C_{w}F_{2w}-, wobei w für eine ganze Zahl im Bereich von 1 bis 6 steht;
Cycloalkylengruppen mit 4 bis 8 Kohlenstoffatomen;
Alkylidengruppen mit 1 bis 6 Kohlenstoffatomen; Cycloalkylidengruppen mit 4 bis 8 Kohlenstoffatomen;
-O-; -S-; -C(O)-; -SO₂- und -SOausgewählt ist;
ausgewählt ist;
(ii) ein PEEK-PEDEK-Copolymer, umfassend:
- Wiederholungseinheiten (R_{PEEK}) der Formel: 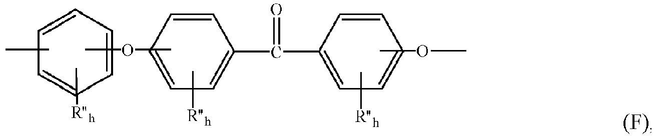 und
- Wiederholungseinheiten (R_{PEDEK}) der Formel: 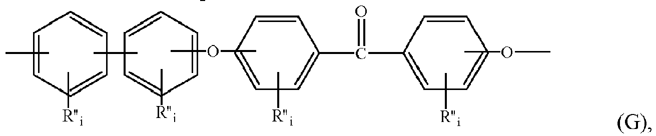 wobei:
R" jeweils gleich oder voneinander verschieden ist und unabhängig aus der Gruppe bestehend aus Wasserstoff, Halogen, Alkyl, Alkenyl, Alkinyl, Aryl, Ether, Thioether, Carbonsäure, Ester, Amid, Imid, Alkali- oder Erdalkalimetallsulfonat, Alkylsulfonat, Alkali- oder Erdalkalimetallphosphonat, Alkylphosphonat, Amin und quartärem Ammonium ausgewählt ist,
h jeweils gleich oder voneinander verschieden ist und für eine ganze Zahl im Bereich von 0 bis 4 steht,
i jeweils gleich oder voneinander verschieden ist und für eine ganze Zahl im Bereich von 0 bis 4 steht; und
die Gesamtkonzentration von Wiederholungseinheiten (R_{PEEK}) und (R_{PEDEK}) mindestens 50 Mol-%, bezogen auf die Gesamtzahl von Molen von Wiederholungseinheiten in dem PEEK-PEDEK-Copolymer, beträgt; und
(iii) gegebenenfalls ein Poly (aryletherketon) (PAEK), umfassend mehr als 50 Mol-% Wiederholungseinheiten (R_{PAEK}) aus der Gruppe bestehend aus Einheiten der Formeln: 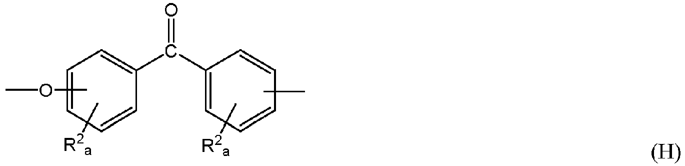 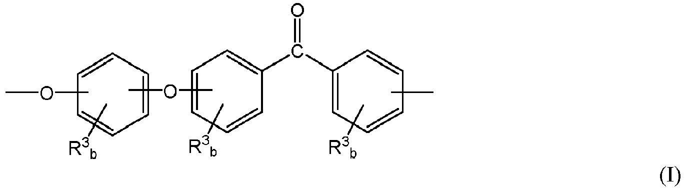 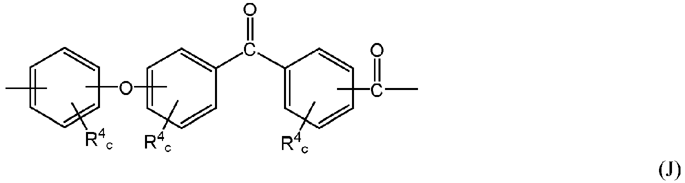 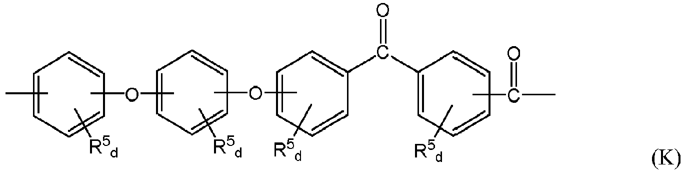 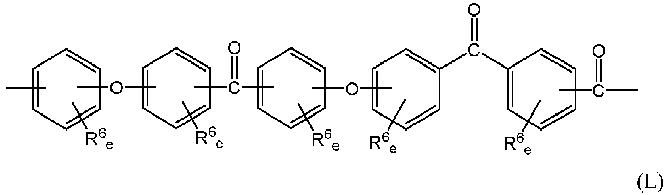 wobei:
R², R³, R⁴, R⁵ und R⁶ jeweils gleich oder voneinander verschieden sind und unabhängig aus der Gruppe bestehend aus Wasserstoff, Halogen, Alkyl, Alkenyl, Alkinyl, Aryl, Ether, Thioether, Carbonsäure, Ester, Amid, Imid, Alkali- oder Erdalkalimetallsulfonat, Alkylsulfonat, Alkali- oder Erdalkalimetallphosphonat, Alkylphosphonat, Amin und quartärem Ammonium ausgewählt sind; und
a, b, c, d und e jeweils gleich oder voneinander verschieden sind und unabhängig aus 0, 1, 2, 3 oder 4 ausgewählt sind.

2. Polymerzusammensetzung nach Anspruch 1, wobei das Polyetherimid (PEI) mindestens 50 Mol-% Wiederholungseinheiten ( R_{PEI} ) aus der Gruppe bestehend aus Einheiten der Formeln 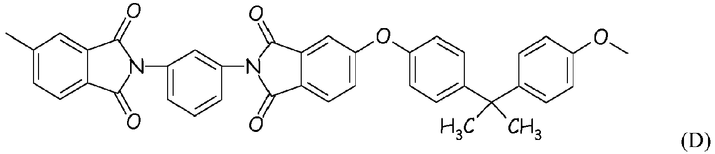 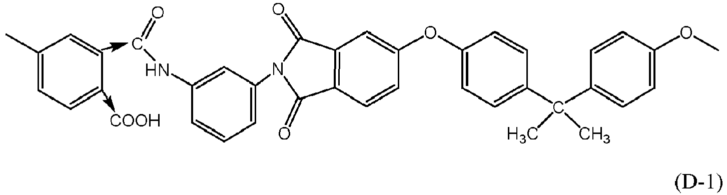 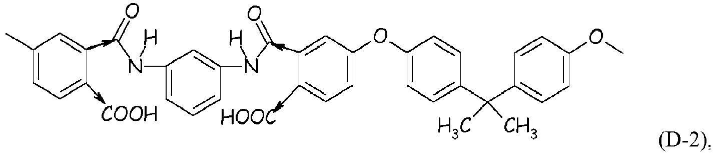 und Kombinationen davon enthält,
wobei in den Formeln (D-1) und (D-2) die Pfeile ʺ→ʺ Isomerie anzeigen, so dass in jeder Wiederholungseinheit die Gruppen, auf die die Pfeile ausgehend von demselben aromatischen Ring zeigen, an dem aromatischen Ring wie gezeigt oder miteinander vertauscht vorliegen können.

3. Polymerzusammensetzung nach Anspruch 1, wobei das Polyetherimid (PEI) mindestens 50 Mol-% Wiederholungseinheiten ( R_{PEI} ) aus der Gruppe bestehend aus Einheiten der Formeln 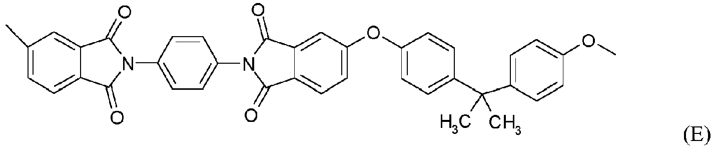 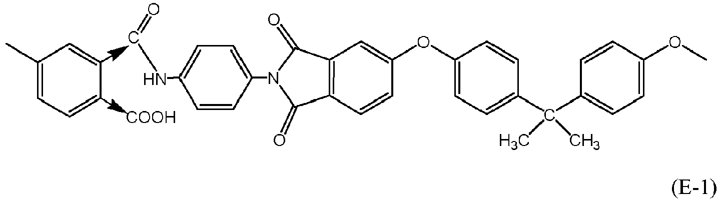 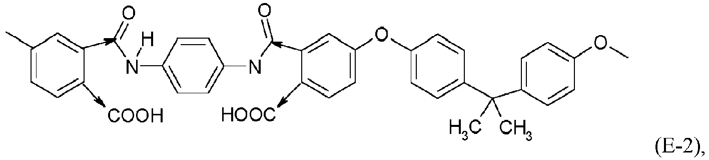 und Kombinationen davon enthält,
wobei in den Formeln (E-1) und (E-2) die Pfeile ʺ→ʺ Isomerie anzeigen, so dass in jeder Wiederholungseinheit die Gruppen, auf die die Pfeile ausgehend von demselben aromatischen Ring zeigen, an dem aromatischen Ring wie gezeigt oder miteinander vertauscht vorliegen können.

4. Polymerzusammensetzung nach einem der Ansprüche 1 bis 3, wobei das PEEK-PEDEK-Copolymer Folgendes umfasst:
- Wiederholungseinheiten (R_{PEEK}) der Formel (F-2): 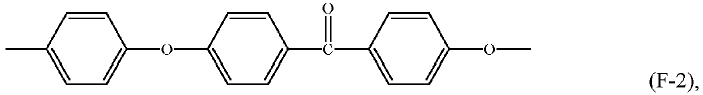 und
- Wiederholungseinheiten (R_{PEDEK}) der Formel (G-2) :

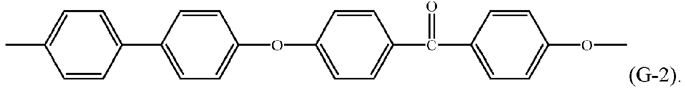

5. Polymerzusammensetzung nach einem der Ansprüche 1 bis 4, wobei die Polymerzusammensetzung das PEEK-PEDEK-Copolymer in einer Menge im Bereich von etwa 1 bis etwa 60 Gew.-%, vorzugsweise von etwa 25 bis etwa 50 Gew.-%, bezogen auf das kombinierte Gewicht des PEEK-PEDEK-Copolymers und des Polyetherimids (PEI), enthält.

6. Polymerzusammensetzung nach einem der Ansprüche 1 bis 5, wobei die Polymerzusammensetzung das Polyetherimid (PEI) in einer Menge im Bereich von etwa 99 bis etwa 40 Gew.-%, vorzugsweise von etwa 75 bis etwa 50 Gew.-%, bezogen auf das kombinierte Gewicht des PEEK-PEDEK-Copolymers und des Polyetherimids (PEI), enthält.

7. Polymerzusammensetzung nach einem der Ansprüche 1 bis 6, wobei das Molverhältnis von Wiederholungseinheiten (R_{PEEK}) / (R_{PEDEK}) im Bereich von 90/10 bis 65/35, vorzugsweise von 80/20 bis 70/30, liegt.

8. Polymerzusammensetzung nach einem der Ansprüche 1 bis 7, wobei die Schmelzflussrate der Polymerzusammensetzung mindestens 25 %, vorzugsweise mindestens 50 %, größer ist als die Schmelzflussrate des PEI alleine, wobei die Schmelzflussrate bei 400 °C mit einem Gewicht von 2,16 kg gemäß ASTM D1238 gemessen wird.

9. Polymerzusammensetzung nach einem der Ansprüche 1 bis 8, wobei die Polymerzusammensetzung eine Dynatup-Schlagzähigkeit im Bereich von etwa 62 bis etwa 72 ft-lb, wie gemäß ASTM D3763 gemessen, aufweist.

10. Polymerzusammensetzung nach einem der Ansprüche 1 bis 9, wobei die Polymerzusammensetzung eine kritische Spannung der Spannungsrissbeständigkeit für Sonnenschutzmittel ≥ 1,0 %, vorzugsweise ≥ 1,5 %, aufweist, wobei die Spannungsrissbeständigkeit als die kritische Spannung eines aus der Polymerzusammensetzung hergestellten Biegestabs gemäß ASTM D-246C mit den Abmessungen 5 Zoll x 0,5 Zoll x 0,125 Zoll nach Beschichten des Biegestabs mit Sonnenschutzcreme und Ausüben einer relativen Spannung von 2 % auf den beschichteten Biegestab über einen Zeitraum von 24 Stunden bei 65 °C und einer relativen Feuchte von 90 % gemessen wird und
wobei das Sonnenschutzmittel mindestens 1,8 Gew.-% Avobenzon, mindestens 7 Gew.-% Homosalat und mindestens 5 Gew.-% Octocrylen umfasst.

11. Polymerzusammensetzung nach einem der Ansprüche 1 bis 10, ferner umfassend einen verstärkenden Füllstoff.

12. Polymerzusammensetzung nach Anspruch 11, wobei es sich bei dem verstärkenden Füllstoff um einen faserförmigen Füllstoff, vorzugsweise Glasfaser, handelt und die Polymerzusammensetzung den faserförmigen Füllstoff in einer Menge im Bereich von 5 Gew.-% bis 50 Gew.-%, vorzugsweise von 15 Gew.-% bis 30 Gew.-%, bezogen auf das Gesamtgewicht der Polymerzusammensetzung, enthält.

13. Verfahren zur Herstellung der Polymerzusammensetzung nach einem der Ansprüche 1 bis 12, umfassend das Schmelzemischen des Polyetherimids (PEI) und des PEEK-PEDEK-Copolymers.

14. Formkörper, umfassend die Polymerzusammensetzung nach einem der Ansprüche 1 bis 12.

15. Formkörper nach Anspruch 14, wobei es sich bei dem Formkörper um ein Luftfahrzeuginnenraumteil, eine Geschirr- oder Lebensmittelverarbeitungskomponente, eine Faser eines Web- oder Vliesstoffs, eine thermoformbare laminierte Folie oder einen additiv hergestellten Gegenstand handelt.

## Revendications

1. Composition de polymère comprenant :
(i) un polyétherimide (PEI) comportant au moins 50 % en moles de motifs répétitifs (R_{PEI}) choisis dans le groupe constitué par des motifs des formules : 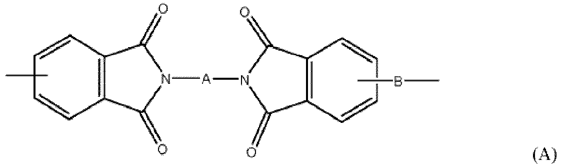 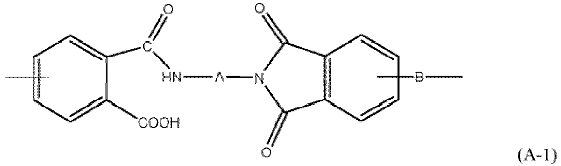 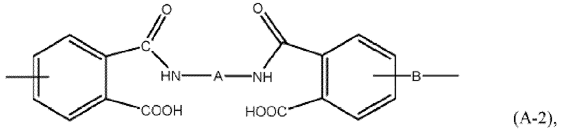
et des combinaisons correspondantes,
chaque B, identique ou différent les uns des autres, étant indépendamment choisi dans le groupe constitué par -O- et -O-Ar-O-,
Ar étant choisi dans le groupe constitué par des groupements de formules : 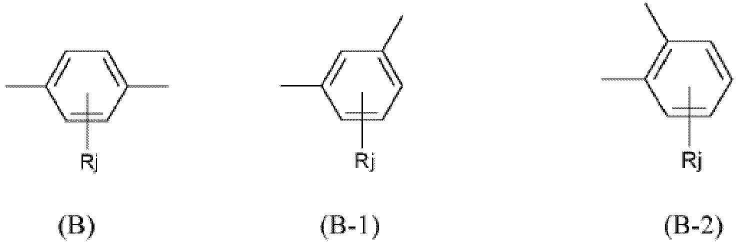 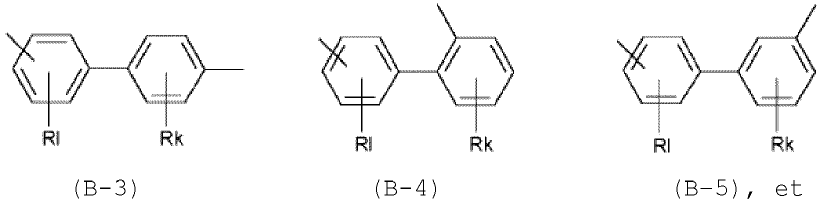 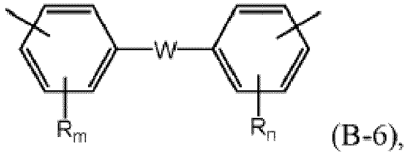
chaque R, identique ou différent les uns des autres, étant indépendamment choisi dans le groupe constitué par hydrogène, halogène, alkyle, alcényle, alcynyle, aryle, éther, thioéther, acide carboxylique, ester, amide, imide, sulfonate de métal alcalin ou alcalino-terreux, sulfonate d'alkyle, phosphonate de métal alcalin ou alcalino-terreux, phosphonate d'alkyle, amine et ammonium quaternaire ;
chaque j, k, l, m et n, identiques ou différents les uns des autres, étant indépendamment choisis parmi 0, 1, 2, 3 et 4, préférablement 0 ; et
W étant choisi dans le groupe constitué par :
des alkylènes possédant 1 à 6 atomes de carbone, en particulier -C(CH₃)₂- et - CᵣH₂ᵣ-, r étant un entier dans la plage de 1 à 6 ;
des perfluoroalkylènes possédant 1 à 6 atomes de carbone, en particulier - C (CF₃) ₂- et -CₛF₂ₛ-, s étant un entier dans la plage de 1 à 6 ;
des cycloalkylènes possédant 4 à 8 atomes de carbone ;
des alkylidènes possédant 1 à 6 atomes de carbone ;
des cycloalkylidènes possédant 4 à 8 atomes de carbone ;
-O- ; -S- ; -C(O)- ; -SO₂- ; et -SO-, chaque A, identique ou différent les uns des autres, étant choisi dans le groupe constitué par -CₜH₂ₜ-, t étant un entier dans la plage de 1 à 6, et des groupements de formules ; 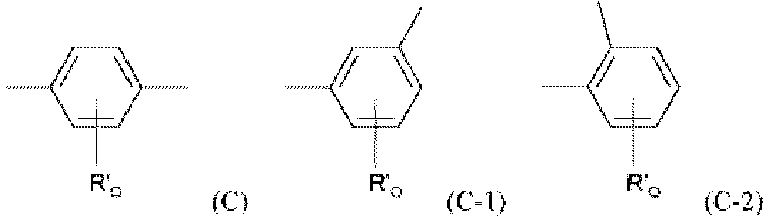 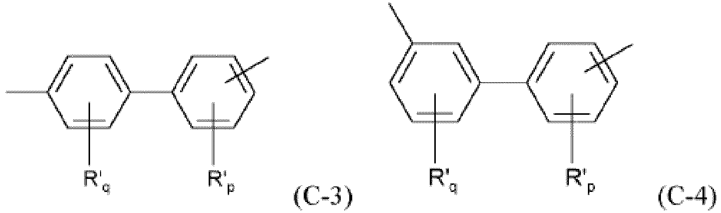 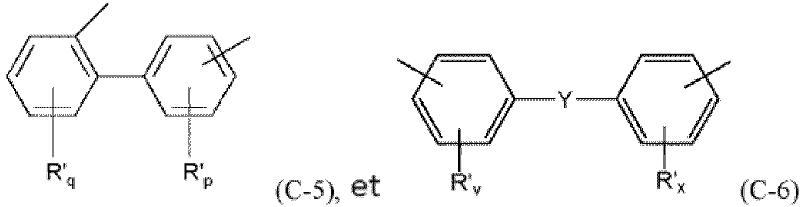
chaque R', identique ou différent les uns des autres, étant indépendamment choisi dans le groupe constitué par hydrogène, halogène, alkyle, alcényle, alcynyle, aryle, éther, thioéther, acide carboxylique, ester, amide, imide, sulfonate de métal alcalin ou alcalino-terreux, sulfonate d'alkyle, phosphonate de métal alcalin ou alcalino-terreux, phosphonate d'alkyle, amine et ammonium quaternaire ;
o, p, q, v et x, identiques ou différents les uns des autres, étant indépendamment choisis parmi 0, 1, 2, 3 et 4, préférablement 0 ; et
Y étant choisi dans le groupe constitué par :
des alkylènes possédant 1 à 6 atomes de carbone, en particulier -C(CH₃)₂- et - CᵤH₂ᵤ-, u étant un entier dans la plage de 1 à 6 ;
des perfluoroalkylènes possédant 1 à 6 atomes de carbone, en particulier - C(CF₃)₂- et -CwF_{2w}-, w étant un entier dans la plage de 1 à 6 ;
des cycloalkylènes possédant 4 à 8 atomes de carbone ; des alkylidènes possédant 1 à 6 atomes de carbone ;
des cycloalkylidènes possédant 4 à 8 atomes de carbone ;
-O- ; -S- ; -C(O)- ; -SO₂- ; et -SO- ;
(ii) un copolymère de type PEEK-PEDEK comprenant :
- des motifs répétitifs (R_{PEEK}) de formule : 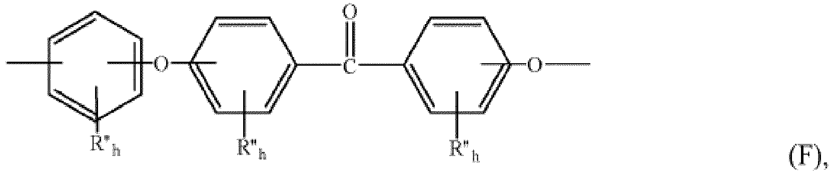 et
- des motifs répétitifs (R_{PEDEK}) de formule : 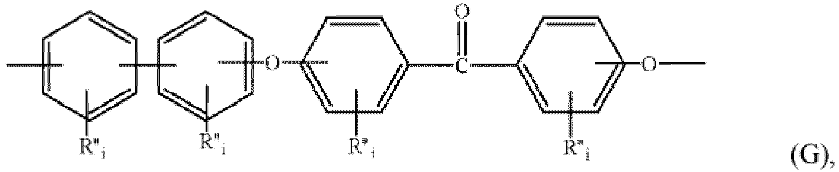
chaque R", identique ou différent les uns des autres, étant choisi dans le groupe constitué par halogène, alkyle, alcényle, alcynyle, aryle, éther, thioéther, acide carboxylique, ester, amide, imide, sulfonate de métal alcalin ou alcalino-terreux, sulfonate d'alkyle, phosphonate de métal alcalin ou alcalino-terreux, phosphonate d'alkyle, amine et ammonium quaternaire,
chaque h, identique ou différent les uns des autres, étant un entier dans la plage de 0 à 4,
chaque i, identique ou différent les uns des autres, étant un entier dans la plage de 0 à 4,
la concentration totale de motifs répétitifs (R_{PEEK}) et (R_{PEDEK}) étant d'au moins 50 % en moles, par rapport au nombre total de moles de motifs répétitifs dans le copolymère de type PEEK-PEDEK ; et
(ii) éventuellement une poly(aryléthercétone) (PAEK) comprenant plus de 50 % en moles de motifs répétitifs (R_{PAEK}) choisis dans le groupe constitué par des motifs de formules : 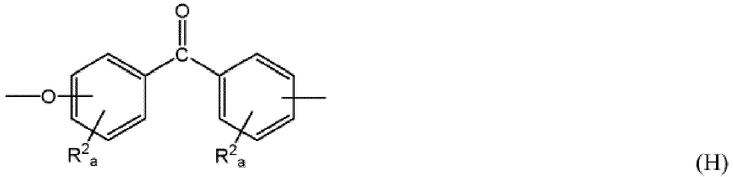 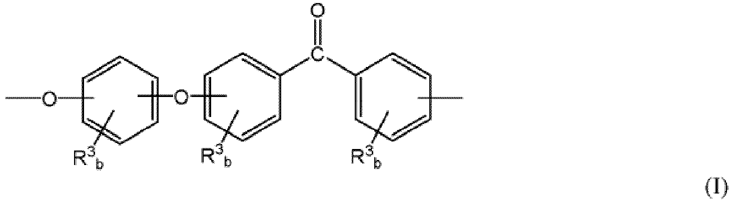 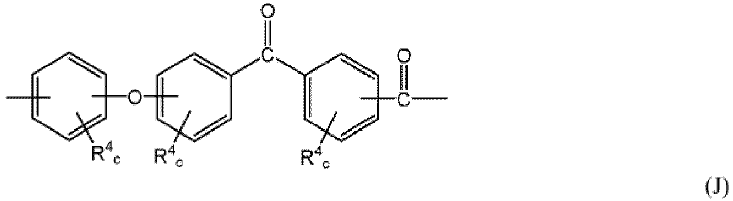 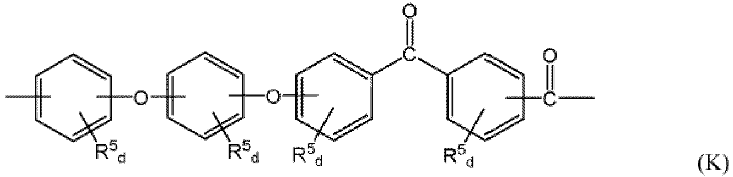 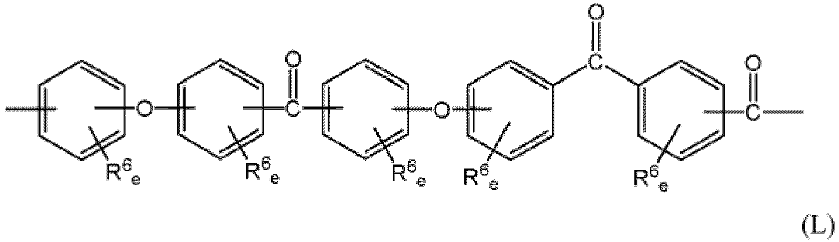
chacun parmi R², R³, R⁴, R⁵ et R⁶, identiques ou différents les uns des autres, étant indépendamment choisis dans le groupe constitué par halogène, alkyle, alcényle, alcynyle, aryle, éther, thioéther, acide carboxylique, ester, amide, imide, sulfonate de métal alcalin ou alcalino-terreux, sulfonate d'alkyle, phosphonate de métal alcalin ou alcalino-terreux, phosphonate d'alkyle, amine et ammonium quaternaire ; et
chacun parmi a, b, c, d et e, identiques ou différents les uns des autres, étant indépendamment choisis parmi 0, 1, 2, 3 et 4.

2. Composition de polymère selon la revendication 1, le polyétherimide (PEI) comprenant au moins 50 % en moles de motifs répétitifs (R_{PEI}) choisis dans le groupe constitué par des motifs de formules : 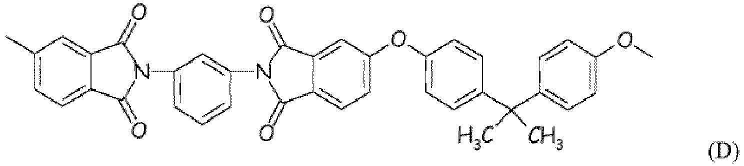 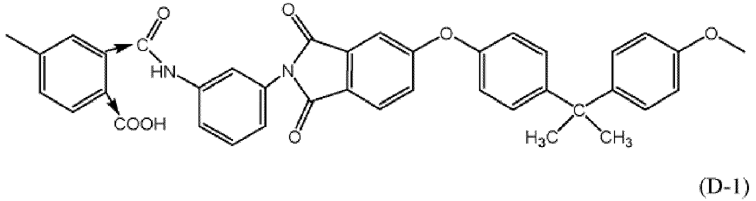 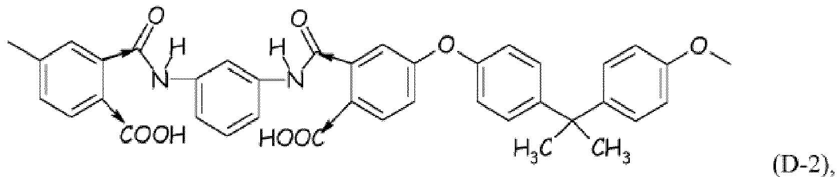 et des combinaisons correspondantes,
dans laquelle dans les formules (D-1) et (D-2), les flèches « →» désignent l'isomérisme, de sorte que dans tout motif répétitif, les groupes sur lesquels les flèches pointent depuis le même cycle aromatique existent comme représentés ou interchangés l'une par rapport à l'autre sur ledit cycle aromatique.

3. Composition de polymère selon la revendication 1, le polyétherimide (PEI) comprenant au moins 50 % en moles de motifs répétitifs (R_{PEI}) choisis dans le groupe constitué par des motifs de formules : 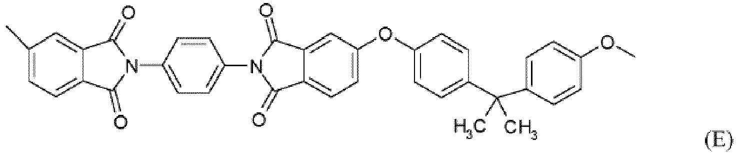 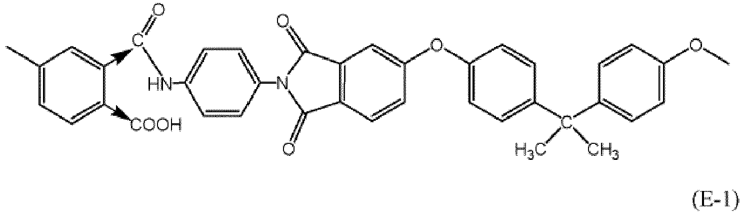 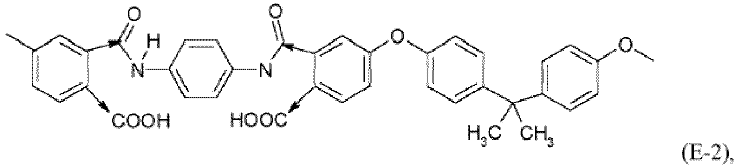 et des combinaisons correspondantes,
dans laquelle dans les formules (E-1) et (E-2), les flèches « →» désignent l'isomérisme, de sorte que dans tout motif répétitif, les groupes sur lesquels les flèches pointent depuis le même cycle aromatique existent comme représentés ou interchangés l'une par rapport à l'autre sur ledit cycle aromatique.

4. Composition de polymère selon l'une quelconque des revendications 1 à 3, le copolymère de type PEEK-PEDEK comprenant :
- des motifs répétitifs (R_{PEEK}) de formule (F-2) : 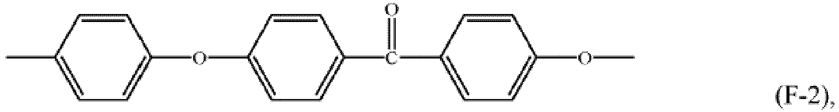 et
- des motifs répétitifs (R_{PEDEK}) de formule (G-2) :

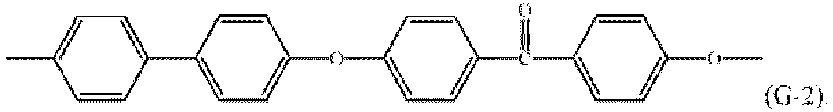

5. Composition de polymère selon l'une quelconque des revendications 1 à 4, la composition de polymère comprenant le copolymère de type PEEK-PEDEK en une quantité dans la plage d'environ 1 à environ 60 % en poids, préférablement d'environ 25 à environ 50 % en poids, sur la base du poids combiné du copolymère de type PEEK-PEDEK et du polyétherimide (PEI) .

6. Composition de polymère selon l'une quelconque des revendications 1 à 5, la composition de polymère comprenant le polyétherimide (PEI) en une quantité dans la plage d'environ 99 à environ 40 % en poids, préférablement d'environ 75 à environ 50 % en poids, sur la base du poids combiné du copolymère de type PEEK-PEDEK et du polyétherimide (PEI) .

7. Composition de polymère selon l'une quelconque des revendications 1 à 6, le rapport molaire de motifs répétitifs (R_{PEEK}) / (R_{PEDEK}) se situant dans la plage de 90/10 à 65/35, préférablement de 80/20 à 70/30.

8. Composition de polymère selon l'une quelconque des revendications 1 à 7, l'indice de fluidité à chaud de la composition de polymère étant au moins 25 %, préférablement au moins 50 % supérieur à l'indice de fluidité à chaud du PEI seul, l'indice de fluidité à chaud étant mesuré à 400 °C avec un poids de 2,16 kg selon la norme ASTM D1238.

9. Composition de polymère selon l'une quelconque des revendications 1 à 8, la composition de polymère possédant une résistance à l'impact Dynatup dans la plage d'environ 62 à environ 72 lb-pi, telle que mesurée selon la norme ASTM D3763.

10. Composition de polymère selon l'une quelconque des revendications 1 à 9, la composition de polymère possédant une contrainte critique de résistance à la fissuration sous l'effet de contraintes environnementales à un écran solaire de ≥ 1,0 %, préférablement ≥1,5 %,
la résistance à la fissuration sous l'effet de contraintes environnementales étant mesurée comme la contrainte critique d'une barre de flexion de 5 in. x 0,5 in. x 0,125 in. selon la norme ASTM D-246C moulée à partir de la composition de polymère après revêtement de la barre de flexion avec une crème écran solaire et application d'une contrainte relative de 2 % sur la barre de flexion revêtue pendant 24 heures à 65 °C et une humidité relative de 90 %, et
l'écran solaire comprenant au moins 1,8 % en poids d'avobenzone, au moins 7 % en poids d'homosalate et au moins 5 % en poids d'octocrylène.

11. Composition de polymère selon l'une quelconque des revendications 1 à 10, comprenant en outre une charge de renforcement.

12. Composition de polymère selon la revendication 11, la charge de renforcement étant une charge fibreuse, préférablement une fibre de verre, et la composition de polymère comprenant la charge fibreuse en une quantité dans la plage de 5 % en poids à 50 % en poids, préférablement de 15 % en poids à 30 % en poids, sur la base du poids total de la composition de polymère.

13. Procédé de préparation de la composition de polymère selon l'une quelconque des revendications 1 à 12, comprenant le mélange à l'état fondu du polyétherimide (PEI) et du copolymère de type PEEK-PEDEK.

14. Article façonné comprenant la composition de polymère selon l'une quelconque des revendications 1 à 12.

15. Article façonné selon la revendication 14, l'article façonné étant une pièce intérieure d'aéronef, de la vaisselle ou un composant pour traitement de produits alimentaires, une fibre d'un tissu tissé ou non tissé, une feuille stratifiée thermoformable ou un article fabriqué de manière additive.
